# EUROPEAN PATENT APPLICATION

(11) **EP 3 876 592 A1**
(43) Date of publication of application: **08.09.2021**
(21) Application number: 19879596.5
(22) Date of filing: 07.10.2019
(51) Int. Cl.: H04W 28/04, H04L 27/26, H04W 16/14, H04W 72/04

(54) **TERMINAL DEVICE, BASE STATION DEVICE, AND COMMUNICATION METHOD**

(30) Priority: 30.10.2018 JP 2018203834
(71) Applicant: Sharp Kabushiki Kaisha, Sakai-shi Osaka 590-8522 (JP); FG Innovation Company Limited, Hong Kong (CN)
(72) Inventor: YOSHIMURA, Tomoki, Sakai City, Osaka 590-8522 (JP); NAKASHIMA, Daiichiro, Sakai City, Osaka 590-8522 (JP); NOGAMI, Toshizo, Sakai City, Osaka 590-8522 (JP); SUZUKI, Shoichi, Sakai City, Osaka 590-8522 (JP); OUCHI, Wataru, Sakai City, Osaka 590-8522 (JP); LEE, Taewoo, Sakai City, Osaka 590-8522 (JP); LIN, Huifa, Sakai City, Osaka 590-8522 (JP)
(74) Representative: Müller-Boré & Partner Patentanwälte PartG mbB
(86) International application number: PCT/JP2019/039552
(87) International publication number: WO 2020/090366

(57) **Abstract**

The present invention is capable of performing communication efficiently. This communication method is used in a terminal device that communicates with a base station device, wherein: a first monitoring occasion and a second monitoring occasion for a PDCCH are set, a reception unit receives the PDCCH in at least the second monitoring occasion; and a HARQ-ACK code book is generated on the basis of a value of a DAI field included in the PDCCH, on the assumption that the PDCCH has been detected in the first monitoring occasion, and the HARQ-ACK code book is transmitted by use of a PUCCH or a PUSCH.

## Description

### FIELD

The present disclosure relates to a terminal device, base station device and methods thereof. The present disclosure claims the benefit of and priority to Japanese Patent Application No. 2018-203834 ("the '834 application"), filed on October 30, 2018. The content(s) of the '834 application are fully incorporated herein by reference for all purposes.

### BACKGROUND

In the third generation partnership project (3rd Generation Partnership Project: 3GPP), the radio access methods and radio networks of cellular mobile communications (hereinafter, referred to as "Long Term Evolution" or "Evolved Universal Terrestrial Radio Access: EUTRA") is being considered. In LTE, a base station device is also called an eNodeB (evolved NodeB), and a terminal device is also called a UE (User Equipment). LTE is a cellular communications system using a plurality of coverage areas of a base station device configured in a cell. A single base station device may also manage a plurality of serving cells.

For 3GPP, in order to propose in the IMT (International Mobile Telecommunication) -2020 which is a standard of the next generation mobile communications system specified by the International Telecommunication Union (ITU), the next generation standard (NR: New Radio) is studied (Non-Patent Literature 1). It is required in a single technology framework that the NR satisfies requirements in the following three assumption scenarios, eMBB (enhanced Mobile Broadband), mMTC (massive Machine Type Communication), and URLLC (Ultra Reliable and Low Latency Communication).

### Prior Art Documents

### Non-Patent Literature

Non-Patent Literature 1: "New SID proposal: Study on New Radio Access Technology," RP-160671, NTT docomo, 3GPP TSG RAN Meeting #71, Goteborg, Sweden, 7th-10th March, 2016.

### SUMMARY

### Problems to Be Addressed

The present disclosure provides a terminal device that performs communications efficiently, a communication method used for the terminal device, a base station device that performs communications efficiently, and a communication method used for the base station device.

### Aspects to Address the Problems

(1) A first aspect of the present disclosure is a terminal device, comprising: a reception unit that sets a first monitoring occasion and a second monitoring occasion for a PDCCH, and receives the PDCCH in at least the second monitoring occasion; and a transmission unit that, assuming the PDCCH is detected in the first monitoring occasion, generates a HARQ-ACK codebook on the basis of a value of a DAI field included in the PDCCH, and transmitting the HARQ-ACK codebook via a PUCCH or a PUSCH.
(2) A second aspect of the present disclosure is a terminal device, comprising: a reception unit that receives a first PDCCH at a first monitoring occasion and receives the second PDCCH at a second monitoring occasion; and a transmission unit that transmits a HARQ-ACK codebook on a PUCCH, the HARQ-ACK codebook includes HARQ-ACK information for each of the first PDCCH and the second PDCCH, the HARQ-ACK codebook is provided based on at least a value of DAI included in the first PDCCH, the HARQ-ACK codebook is provided regardless of the value of DAI included in the second PDCCH.
(3) A third aspect of the present disclosure is a base station device, comprising: a transmission unit that transmits setting information for a first monitoring occasion and a second monitoring occasion for a PDCCH, and transmits the PDCCH in at least the second monitoring occasion; and a reception unit that receives a PUCCH or PUSCH including a HARQ-ACK codebook, wherein the HARQ-ACK codebook is generated assuming the PDCCH is detected in the first monitoring occasion on the basis of a value of a DAI field included in the PDCCH.
(4) A fourth aspect of the present disclosure is a base station device, comprising: a transmission unit that transmits a first PDCCH at a first monitoring occasion and transmits the second PDCCH at a second monitoring occasion; and a reception unit that receives a PUCCH including a HARQ-ACK codebook, wherein, the HARQ-ACK codebook includes HARQ-ACK information for each of the first PDCCH and the second PDCCH, the HARQ-ACK codebook is provided based on at least a value of DAI included in the first PDCCH, the HARQ-ACK codebook is provided regardless of the value of DAI included in the second PDCCH.
(5) A fifth aspect of the present disclosure is a communications method used in a terminal device, wherein the communications method comprises: setting a first monitoring occasion and a second monitoring occasion for a PDCCH, and receiving the PDCCH in at least the second monitoring occasion; and assuming the PDCCH is detected in the first monitoring occasion, generating a HARQ-ACK codebook on the basis of a value of a DAI field included in the PDCCH, and transmitting the HARQ-ACK codebook via a PUCCH or a PUSCH.
(6) A sixth aspect of the present disclosure is a communications method used in a terminal device, wherein the communications method comprises: receiving a first PDCCH at a first monitoring occasion and receiving the second PDCCH at a second monitoring occasion; and transmitting a HARQ-ACK codebook on a PUCCH, the HARQ-ACK codebook includes HARQ-ACK information for each of the first PDCCH and the second PDCCH, the HARQ-ACK codebook is provided based on at least a value of DAI included in the first PDCCH, the HARQ-ACK codebook is provided regardless of the value of DAI included in the second PDCCH.
(7) A seventh aspect of the present disclosure is a communications method used in a base station device, wherein the communications method comprises: transmitting setting information for a first monitoring occasion and a second monitoring occasion for a PDCCH, and transmitting the PDCCH in at least the second monitoring occasion; and receiving a PUCCH or PUSCH including a HARQ-ACK codebook, wherein the HARQ-ACK codebook is generated assuming the PDCCH is detected in the first monitoring occasion on the basis of a value of a DAI field included in the PDCCH.
(8) A eighth aspect of the present disclosure is a communications method used in a base station device, wherein the communications method comprises: transmitting a first PDCCH at a first monitoring occasion and transmitting the second PDCCH at a second monitoring occasion; and receiving a PUCCH including a HARQ-ACK codebook, wherein, the HARQ-ACK codebook includes HARQ-ACK information for each of the first PDCCH and the second PDCCH, the HARQ-ACK codebook is provided based on at least a value of DAI included in the first PDCCH, the HARQ-ACK codebook is provided regardless of the value of DAI included in the second PDCCH.

### Effects

According to the present disclosure, the terminal device is able to perform communications efficiently. Furthermore, the base station device is able to perform communications efficiently.

### BRIEF DESCRIPTION OF THE DRAWINGS

Figure 1 is a schematic diagram of a radio communications system according to an aspect of the present disclosure.
Figure 2 is an example illustrating a relationship between N^{slot}_{symb}, subcarrier spacing configuration µ, slot configuration and CP configuration according to an aspect of the present disclosure.
Figure 3 is a schematic diagram of an example of a resource grid of a subframe according to an aspect of the present disclosure.
Figure 4 is an example illustrating a relationship between PUCCH format and PUCCH format length N^{PUCCH}_{symb} according to an aspect of the present disclosure.
Figure 5 is a schematic diagram illustrating a monitoring occasion of a search area set according to an aspect of the present disclosure.
Figure 6 is a schematic diagram illustrating the corresponding example of a monitoring occasion for search space set and a monitoring occasion for PDCCH according to an aspect of the present disclosure.
Figure 7 is a schematic diagram illustrating an example of a step of composing HARQ-ACK codebook information according to an aspect of the present disclosure.
Figure 8 is a schematic diagram illustrating an example of a step of composing HARQ-ACK codebook information according to an aspect of the present disclosure.
Figure 9 is a schematic diagram illustrating an example of a step of composing HARQ-ACK codebook information according to an aspect of the present disclosure.
Figure 10 is a schematic block diagram of a configuration of a terminal device 1 according to an aspect of the present disclosure.
Figure 11 is a schematic block diagram of a configuration of a base station device 3 according to an aspect of the present disclosure.
Figure 12 is a schematic diagram illustrating an example of transmission of the physical signal according to an aspect of the present disclosure.
Figure 13 is a schematic diagram illustrating an example of transmission of the physical signal according to an aspect of the present disclosure.
Figure 14 is a schematic diagram illustrating an example of downlink communications according to an aspect of the present disclosure.

### DESCRIPTION

Hereinafter, the implementations of the present disclosure will be described.

"A and/or B" may be a term that includes "A", "B", or "A and B".

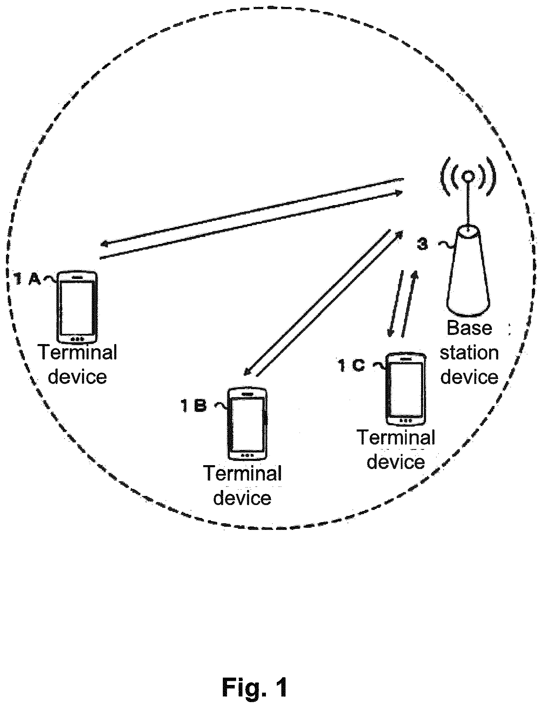

Figure 1 is a schematic diagram of a radio communications system according to an aspect of the present disclosure. In Figure 1, the radio communications system includes terminal devices 1A to 1C and a base station device 3. Hereinafter, the terminal devices 1A to 1C are also referred to as a terminal device 1.

The base station device 3 may include one or both of an MCG (Master Cell Group) and an SCG (Secondary Cell Group). The MCG is a group of serving cells including at least PCell (Primary Cell). The SCG is a group of serving cells including at least a PSCell (Primary Secondary Cell). The PCell may be a serving cell provided based on an initial connection. The MCG may include one or more SCells (Secondary Cells). The SCG may include one or more SCells. The serving cell identity is a short identity for identifying a serving cell. The serving cell identity may be provided by a higher layer parameter.

The MCG may be composed of a serving cell on EUTRA. The SCG may be composed of a serving cell of the next-generation standard (New Radio, NR).

Hereinafter, the frame configuration will be described.

In the radio communications system according to an aspect of the present disclosure, at least OFDM (Orthogonal Frequency Division Multiplex) is used. An OFDM symbol is a unit of the OFDM time domain. An OFDM symbol includes at least one or more subcarriers. An OFDM symbol may also be converted to a time-continuous signal in generating baseband signal. In the downlink, at least CP-OFDM (Cyclic Prefix-Orthogonal Frequency Division Multiplex) is used. In the uplink, either CP-OFDM or DFT-s-OFDM (Discrete Fourier Transform-spread-Orthogonal Frequency Division Multiplex) is used. DFT-s-OFDM may be obtained by applying transform precoding to CP-OFDM.

The OFDM symbol may be a name of a CP appended to the OFDM symbol. That is, a certain OFDM symbol may be configured to include the certain OFDM symbol and the CP appended to the certain OFDM symbol.

The subcarrier spacing (SCS) may be obtained by a subcarrier spacing Δf = 2 ^{µ} · 15 kHz. For example, the subcarrier spacing configuration µ may be set to any one of 0, 1, 2, 3, 4, and/or 5. The subcarrier spacing configuration µ may also be set by a higher layer parameter for a certain BWP (BandWidth Part).

In the radio communications system according to an aspect of the present disclosure, a time unit Tc is used to represent the length in the time domain. The time unit Tc may be obtained by Tc = 1 / (Δfₘₐₓ · N_{f}). Δfₘₐₓ may be the maximum value of the subcarrier spacing supported in the radio communications system according to an aspect of the present disclosure. Δfₘₐₓ may be Δfₘₐₓ = 480 kHz. N_{f} may be N_{f} = 4096. The constant κ is κ = Δfₘₐₓ · N_{f} / (Δf_{ref} N_{f, ref}) = 64. Δf_{ref} may be 15 kHz. N_{f, ref} may be 2048.

The constant κ may be a value indicating the relationship between the reference subcarrier spacing and Tc. The constant κ may also be used for subframe length. The number of slots included in a subframe may be obtained based on at least the constant κ. Δf_{ref} is a reference subcarrier spacing, and N_{f, ref} is a value corresponding to the reference subcarrier spacing.

The downlink transmission and/or the uplink transmission is composed of 10ms frame(s). A frame is configured to include 10 subframes. The length of the subframe is 1ms. The length of the frame may be obtained regardless of the subcarrier spacing Δf. In other words, the frame configuration may be obtained regardless of µ. The length of the subframe may be obtained regardless of the subcarrier spacing Δf. In other words, the subframe configuration may be obtained regardless of µ.

The number and index of slots included in a subframe may be obtained for the configuration µ of a certain subcarrier spacing. For example, the slot number n^{µ}ₛ may be obtained in ascending order in the range of 0 to N^{subframe,µ}ₛₗₒₜ -1 in the subframe. The number and index of the slots included in the frame may be obtained for the subcarrier spacing configuration µ. Furthermore, the slot number n^{µ}_{s, f} may be obtained in ascending order in the range of 0 to N^{frame, µ}ₛₗₒₜ -1 in the frame. Furthermore, consecutive N^{slot}_{symb} OFDM symbols may be included in one slot. N^{slot}_{symb} may be obtained based on at least a part or all of the CP (Cyclic Prefix) configuration. The CP configuration may be obtained based on at least higher layer parameters. The CP configuration may be obtained based on at least a dedicated RRC signaling. The first slot number and the second slot number may also be referred to a slot number (slot index).

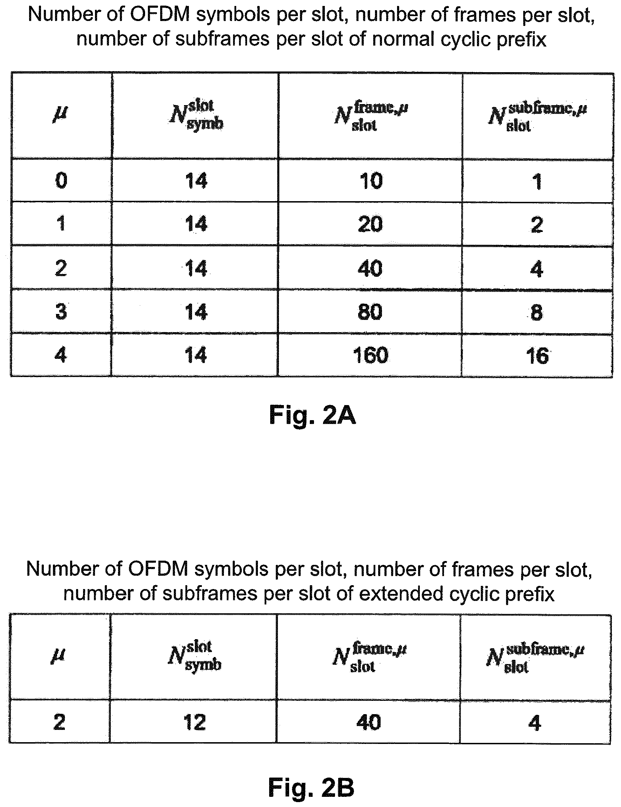

Figure 2 is an example illustrating a relationship between N^{slot}_{symb}, subcarrier spacing configuration µ, slot configuration and CP configuration according to an aspect of the present disclosure. In Figure 2A, when the slot configuration is 0, the subcarrier spacing configuration µ is 2, and the CP configuration is a normal CP, N^{slot}_{symb} = 14, N^{frame, µ}ₛₗₒₜ = 40, N^{subframe, µ}ₛₗₒₜ = 4. Furthermore, in Figure 2B, when the slot configuration is 0, the subcarrier spacing configuration µ is 2, and the CP configuration is an extended CP, N^{slot}_{symb} = 12, N^{frame, µ}ₛₗₒₜ = 40, N^{subframe, µ}ₛₗₒₜ = 4.

Hereinafter, the physical resources will be described.

Antenna port may be defined by that a channel on which a symbol transmitted at one antenna port can be estimated according to the channel on which other symbols are transmitted at the same antenna port. If a large scale property of a channel on which a symbol is transmitted at one antenna port can be estimated according to the channel on which a symbol is transmitted at another antenna port, the two antenna ports are referred to as QCL (Quasi Co-Located). The large scale property may include at least the long interval property of a channel. The large scale property may also include a part or all of delay spread, Doppler spread, Doppler shift, average gain, average delay, and beam parameters spatialDxparameters. For beam parameters, the first antenna port and the second antenna port being QCL may also indicate that the receiving beam assumed by the receiving side corresponding to the first antenna port and the receiving beam assumed by the receiving side w corresponding to the second antenna port are the same. For beam parameters, the first antenna port and the second antenna port being QCL may also indicate that the transmission beam assumed by the receiving side corresponding to the first antenna port and the transmission beam assumed by the receiving side w corresponding to the second antenna port are the same. The terminal device 1 may assume that the two antenna ports are QCL if the large scale property of the channel on which the symbol is transmitted at one antenna port can be estimated according to the channel on which the symbol is transmitted at another antenna port. The two antenna ports being QCL may also indicate that the two antenna ports are assumed to be QCL.

For the subcarrier spacing configuration and carrier configuration, respectively, the resource grid defined by N^{size,µ}_{grid,x} N^{RB}_{sc} subcarriers and N^{subframe,µ}_{symb} OFDM symbols is obtained. N^{size,µ}_{grid,x} may indicate the number of resource blocks obtained for the subcarrier spacing configuration µ of the carrier x. N^{size,µ}_{grid,x} may correspond to the value of the higher layer parameter CarrierBandwidth. Carrier x indicates any one of a downlink carrier or an uplink carrier. In other words, x may be one of "DL" or "UL." N^{RB}_{sc} may also indicate the number of subcarriers included in one resource block. N^{RB}_{sc} may be 12. At least one resource grid may be obtained for each antenna port p and/or each subcarrier spacing configuration µ and/or for each the transmission direction configuration. The transmission direction includes at least a downlink (DL) and an uplink (UL). Hereinafter, a part or all of a parameter set including at least the antenna port p, the subcarrier spacing configuration µ, and the transmission direction configuration may also be referred to as a first radio parameter set. In other words, one resource grid may be obtained for each first radio parameter set.

In the downlink, a carrier included in a serving cell is referred to as a downlink carrier (or a downlink component carrier). In the uplink, a carrier included in a serving cell is referred to as an uplink carrier (uplink component carrier). The downlink component carrier and the uplink component carrier are collectively referred to as a component carrier (or a carrier).

The type of serving cell may be PCell, PSCell, or SCell. The PCell may be a serving cell identified based on at least the cell ID acquired from the SS/PBCH in the initial connection. The SCell may be a serving cell used in carrier aggregation. The SCell may be a serving cell provided at least based on dedicated RRC signaling.

Each element in the resource grid obtained for each first radio parameter set is referred to as a resource element. The resource element may be determined by a frequency domain index k_{sc} and a time domain index l_{sym}. For a certain first radio parameter set, the resource element is determined by a frequency domain index k_{sc} and a time domain index l_{sym}. The resource element determined by the frequency domain index k_{sc} and the time domain index l_{sym} is referred to as a resource element (k_{sc}, l_{sym}). The frequency domain index k_{sc} indicates any value from 0 to N^{µ}_{RB} N^{RB}_{sc} -1. N^{µ}_{RB} may be the number of resource blocks obtained for the subcarrier spacing configuration µ. N^{RB}_{sc} is the number of subcarriers included in the resource block, and N^{RB}_{sc} = 12. The frequency domain index ksc may correspond to the subcarrier index k_{sc}. The time domain index l_{sym} may correspond to the OFDM symbol index l_{sym}.

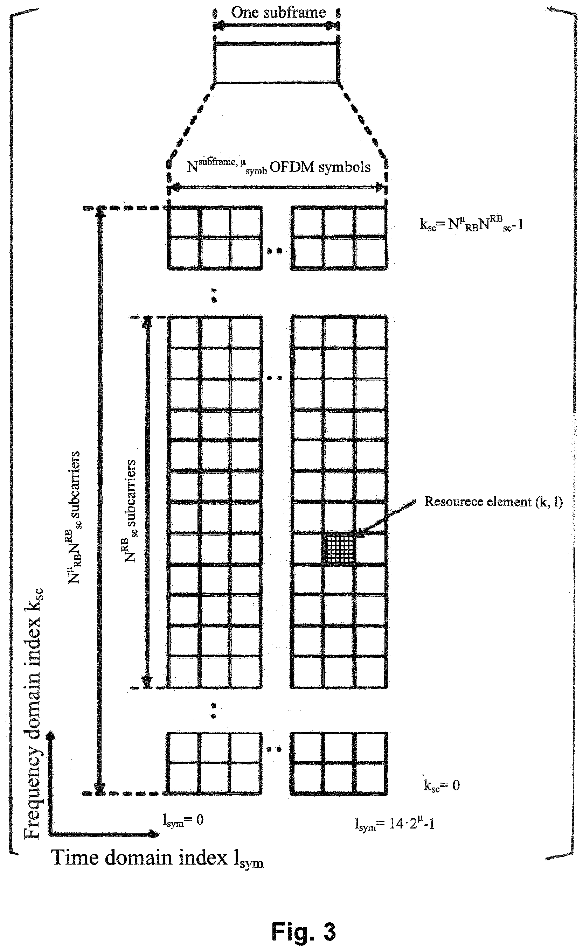

Figure 3 is a schematic diagram of an example of a resource grid of a subframe according to an aspect of the present disclosure. In the resource grid of Figure 3, the horizontal axis is the time domain index l_{sym}, and the vertical axis is the frequency domain index k_{sc}. In one subframe, the frequency domain resource grid includes N^{µ}_{RB} N^{rb}_{sc} subcarriers. In one subframe, the time domain resource grid may include 14 . 2^{µ} OFDM symbols. One resource block is composed of N^{RB}_{sc} subcarriers. The time domain resource block may correspond to one OFDM symbol. The time domain resource block may correspond to 14 OFDM symbols. The time domain resource block may correspond to one or more slots. The time domain resource block may correspond to one subframe.

The terminal device 1 may be instructed to perform transmission and reception using only a subset of the resource grid. A subset of the resource grid may also be referred to as BWP, which may be obtained based on at least a part or all of higher layer parameters and/or the DCI. BWP is also called a carrier bandwidth part. The terminal device 1 may not be instructed to perform transmission and receiving using all sets of the resource grid. In other words, the terminal device 1 may be instructed to perform transmission and receiving using a part of frequency resources in the resource grid. One BWP may be composed of a plurality of resource blocks in the frequency domain. One BWP may be composed of a plurality of consecutive resource blocks in the frequency domain. BWP configured for a downlink carrier is also referred to as a downlink BWP. BWP configured for an uplink carrier is also referred to as an uplink BWP. The BWP may be a subset of the carrier band.

One or more downlink BWPs may be configured for each serving cell. One or more uplink BWPs may be configured for each serving cell.

In the one or more downlink BWPs configured for the serving cell, one downlink BWP may be configured as an active downlink BWP. The downlink BWP switch is used for deactivating one active downlink BWP, and activating an inactive downlink BWP other than the one active downlink BWP. The downlink BWP switch may be controlled by the BWP field included in the downlink control information. The downlink BWP switch may be controlled based on the higher layer parameters.

In the active downlink BWP, the DL-SCH may be received. In the active downlink BWP, the PDCCH may be monitored. In the active downlink BWP, the PDSCH may be received.

In the inactive downlink BWP, the DL-SCH is not received. In the inactive downlink BWP, the PDCCH is not monitored. The CSI for inactive downlink BWP is not reported.

In one or more downlink BWPs configured for the serving cell, two or more downlink BWPs may not be configured as active downlink BWPs.

In the one or more uplink BWPs configured for the serving cell, one uplink BWP may be configured as an active uplink BWP. The uplink BWP switch is used for deactivating one active uplink BWP, and activating an inactive uplink BWP other than the one active uplink BWP. The uplink BWP switch may be controlled by the BWP field included in the downlink control information. The downlink BWP switch may be controlled based on the higher layer parameters.

In the active uplink BWP, the UL-SCH may be transmitted. In the active uplink BWP, the PUCCH may be transmitted. In the active uplink BWP, the PRACH may be transmitted. In the active uplink BWP, the SRS may be transmitted.

In the inactive uplink BWP, the UL-SCH is not transmitted. In the inactive uplink BWP, the PUCCH is not transmitted. In the inactive uplink BWP, the PRACH is not transmitted. In the inactive uplink BWP, the SRS is not transmitted.

In one or more uplink BWPs configured for the serving cell, two or more uplink BWPs may not be configured as active uplink BWPs.

The higher layer parameters are parameters included in a higher layer signal. The higher layer signal may be RRC (Radio Resource Control) signaling or MAC CE (Medium Access Control Element). Here, the higher layer signal may be an RRC layer signal or a MAC layer signal.

The higher layer signal may be common RRC signaling. The common RRC signaling may include at least a part or all of the following Features C1 to C3.
Feature C1) mapped to BCCH logical channel or CCCH logical channel
Feature C2) including at least radioResourceConfigCommon information element
Feature C3) mapped to PBCH

The ReconfigurationWithSync information element may include indicating information of configuration commonly used in the serving cell. The configuration commonly used in the serving cell may include at least the configuration of the PRACH. The configuration of the PRACH may indicate at least one or more random access preamble indexes. The configuration of the PRACH may indicate at least a time/frequency resource of the PRACH.

The common RRC signaling may include at least common RRC parameters. The common RRC parameter may be a parameter commonly used (cell-specific) in the serving cell.

The higher layer signal may be a dedicated RRC signaling. The dedicated RRC signaling may include at least a part or all of the following Features D1 to D2.
Feature D1) mapped to DCCH logical channel
Feature D2) including at least a ReconfigrationWithSync information element

For example, the MIB, the first system information, and the second system information may be included in common RRC signaling. Furthermore, a higher layer message that is mapped to the DCCH logical channel and includes at least the ReconfigrationWithSync may be included in the common RRC signaling. Furthermore, a higher layer message that is mapped to the DCCH logical channel and does not include the ReconfigrationWithSync information element may also be included in the dedicated RRC signaling. Furthermore, a higher layer message that is mapped to the DCCH logical channel and that includes at least the ReconfigrationWithSync information element may also be included in the dedicated RRC signaling.

The SIB may indicate at least the time index of the SS (Synchronization Signal) block. The SS block may also be referred to as an SS/PBCH block. The SIB may include at least information related to the PRACH resources. The SIB may include at least information related to the configuration of the initial connection.

The ReconfigrationWithSync information element may include at least information related to the PRACH resource. The ReconfigrationWithSync information element may include at least information related to the configuration of the initial connection.

The dedicated RRC signaling may include at least a dedicated RRC parameter. The dedicated RRC parameter may be a parameter used dedicated for the terminal device 1 (UE-specific). The dedicated RRC signaling may include at least the common RRC parameters.

The common RRC parameters and dedicated RRC parameters may also be referred to as the higher layer parameters.

Hereinafter, physical channels and physical signals according to various implementations of the present disclosure will be described.

An uplink physical channel may correspond to a set of resource elements that carry information generated in a higher layer. An uplink physical channel is a physical channel used in an uplink carrier. In the radio communications system according to one aspect of the present disclosure, at least some or all of the following uplink physical channels are used.
- Physical uplink control channel (PUCCH)
- Physical uplink shared channel (PUSCH)
- Physical random access channel (PRACH)

The PUCCH may be used for transmitting uplink control information (UCI). The uplink control information includes channel state information (CSI), scheduling request (SR), and a part or all of HARQ-ACK (Hybrid Automatic Repeat request ACKnowledgement) corresponding to transport blocks (TB, MAC PDU (Medium Access Control Protocol Data Unit), DL-SCH (Downlink-Shared Channel), and PDSCH (Physical Downlink Shared Channel)).

The uplink control information may be multiplexed on PUCCH. The multiplexed PUCCH may be transmitted.

The HARQ-ACK may include at least a HARQ-ACK bit corresponding to at least one transport block. The HARQ-ACK bit may indicate ACK (acknowledgement) or NACK (negative-acknowledgement) corresponding to one or more transport blocks. HARQ-ACK may include at least a HARQ-ACK codebook including one or more HARQ-ACK bits. The HARQ-ACK bit corresponding to one or more transport blocks may indicate that the HARQ-ACK bit corresponds to a PDSCH including the one or more transport blocks.

The HARQ-ACK bit may indicate ACK or NACK corresponding to one CBG (Code Block Group) included in the transport block. HARQ-ACK is also referred to as HARQ feedback, HARQ information, or HARQ control information.

Scheduling Request (SR) may be at least used to request PUSCH resources for initial transmission. The scheduling request bit may be used to indicate either a positive SR or a negative SR. The scheduling request bit indicating a positive SR may also be referred to as "transmitting a positive SR." A positive SR may indicate that the terminal device 1 requests a PUSCH resource for initial transmission. A positive SR may indicate that the scheduling request is triggered by higher layers. A positive SR may be transmitted when the higher layer indicates to transmit a scheduling request. The scheduling request bit indicating a negative SR may also referred to as "transmitting a negative SR." A negative SR may indicate that the terminal device 1 does not request PUSCH resources for initial transmission. A negative SR may indicate that the scheduling request is not triggered by higher layers. A negative SR may be transmitted when the higher layer does not indicate to transmit a scheduling request.

The scheduling request bit may be used to indicate either a positive SR or a negative SR for one or more SR configurations. Each of the one or more SR configurations may correspond to one or more logical channels. The positive SR for a SR configuration may be the positive SR for any or all of the one or more logical channels corresponding to the SR configuration. The negative SR may not correspond to a specific SR configuration. The SR indicating negative may be a SR indicating negative for all SR configurations.

The SR configuration may be a scheduling request ID (SchedulingRequestID). The scheduling request ID may be obtained by a higher layer parameter.

The channel state information may include at least a part or all of a channel quality indicator (CQI), a precoder matrix indicator (PMI), and a rank indicator (RI). The CQI is an index related to channel quality (for example, transmission strength), and the PMI is an index indicating a precoder. The RI is an index indicating the transmission rank (or the number of transmission layers).

The channel state information may be obtained based at least on the received physical signal used at least for channel measurement (for example, CSI-RS). The channel state information may include a value selected by the terminal device 1. The channel state information may be selected by the terminal device 1 based at least on the received physical signal used at least for channel measurement. The channel measurements include interference measurements.

The channel state information report is a report of channel state information. The channel state information report may include CSI part 1 and/or CSI part 2. The CSI part 1 may be configured to include at least a part or all of wideband channel quality information (wideband CQI), wideband precoder matrix index (wideband PMI), and rank index. The number of bits of CSI part 1 multiplexed on PUCCH may be a predetermined value, which is regardless of the value of the rank index of the channel state information report. The number of bits of CSI part 2 multiplexed on PUCCH may be obtained based on the value of the rank index of the channel state information report. The rank index of the channel state information report may be a value of the rank index used for calculating the channel state information report. The rank index of the channel state information may be a value indicated by the rank index field included in the channel state information report.

The rank index set permitted in the channel state information report may be a part or all of 1 to 8. The rank index set permitted in the channel state information report may be obtained based at least on the higher layer parameter RankRestriction. When the rank index set permitted in the channel state information report includes only one value, the rank index in the channel state information report may be the one value.

A priority may be set for the channel state information report. The priority of the channel state information report may be obtained based at least on a part or all of the setting relating to the time domain behavior of the channel state information report, the type of content of the channel state information report, the index of the channel state information report and/or the indices of the serving cells set with measurements of the channel state information report.

The setting relating to the time domain behavior of the channel state information report may indicate whether the channel state information report is set to perform any one of aperiodically, semi-persistently, and semi-statically.

The type of content of the channel state information report may indicate whether the channel state information report includes RSRP (Reference Signals Received Power) of Layer 1.

The index of the channel state information report may be obtained by the higher layer parameter.

The PUCCH supports PUCCH format (PUCCH format 0 to PUCCH format 4). The PUCCH format may be mapped to the PUCCH and transmitted. The PUCCH format may be transmitted with the PUCCH. The transmission of the PUCCH format may also indicate the transmission of the PUCCH.

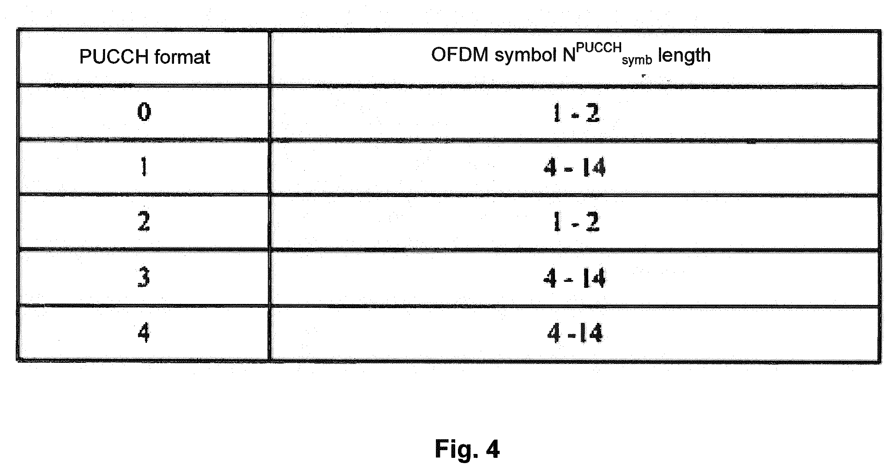

Figure 4 is an example illustrating a relationship between PUCCH format and PUCCH format length N^{PUCCH}_{symb} according to an aspect of the present disclosure. The PUCCH format length N^{PUCCH}_{symb} 0 is 1 or 2 OFDM symbols. The PUCCH format length N^{PUCCH}_{symb} 1 is any one of 4 to 14 OFDM symbols. The PUCCH format length N^{PUCCH}_{symb} 2 is 1 or 2 OFDM symbols. The PUCCH format length N^{PUCCH}_{symb} 3 is any one of 4 to 14 OFDM symbols. The PUCCH format length N^{PUCCH}_{symb} 4 is any one of 4 to 14 OFDM symbols.

The PUSCH is at least used for transmitting a transport block (TB, MAC PDU, UL-SCH). The PUSCH may also be used for transmitting at least a part or all of the transport blocks, HARQ-ACK, channel state information, and scheduling requests. The PUSCH is at least used for transmitting the random access message 3.

The PRACH is at least used for transmitting a random access preamble (random access message 1). The PRACH is at least used in a part or all of an initial connection establishment procedure, a handover procedure, a connection re-establishment procedure, synchronization (timing adjustment) for PUSCH transmission, and a resource request for the PUSCH. The random access preamble may be used for notifying the base station device 3 of an index (random access preamble index) obtained from a higher layer of the terminal device 1.

The random access preamble may be obtained by cyclically shifting the Zadoff-Chu sequence corresponding to the physical root sequence index u. The Zadoff-Chu sequence may be generated based on the physical root sequence index u. A plurality of random access preambles may be defined in one serving cell. The random access preamble may be determined based at least on an index of the random access preamble. Different random access preambles corresponding to different indices of random access preambles may correspond to different combinations of physical root sequence index u and cyclic shift. The physical root sequence index u and the cyclic shift may be obtained based at least on the information included in the system information. The physical root sequence index u may be an index that identifies a sequence included in the random access preamble. The random access preamble may also be identified based at least on the physical root sequence index u.

In Figure 1, the following uplink physical signals are used in the uplink radio communications. The uplink physical signal may not be used for transmitting information output from a higher layer, but is used by the physical layer.
- UL DMRS (UpLink Demodulation Reference Signal)
- SRS (Sounding Reference Signal)
- UL PTRS (UpLink Phase Tracking Reference Signal)

The UL DMRS is related to the transmission of PUSCH and/or PUCCH. The UL DMRS is multiplexed with PUSCH or PUCCH. The base station device 3 may use UL DMRS in order to perform the PUSCH or PUCCH channel correction. Hereinafter, transmitting the PUSCH and the UL DMRS related to the PUSCH together is referred to as transmitting the PUSCH for simplicity. Hereinafter, transmitting the PUCCH and the UL DMRS related to the PUCCH together is referred to as transmitting the PUCCH for simplicity. The UL DMRS related to PUSCH is also referred to as an UL DMRS for PUSCH. The UL DMRS related to PUCCH is also referred to as an UL DMRS for PUCCH.

The SRS may not be related to PUSCH or PUCCH transmission. The base station device 3 may use the SRS for measuring the channel state. The SRS may be transmitted in the last OFDM symbol of a subframe or in the OFDM symbol that is a predetermined number of OFDM symbols from the last.

The UL PTRS may be a reference signal used at least for phase tracking. The UL PTRS may be related to a UL DMRS group that includes at least an antenna port used for one or more UL DMRS. The relationship between the UL PTRS and the UL DMRS group may indicate that at least a part or all of the antenna ports of the UL PTRS and the antenna ports included in the UL DMRS group are QCL. The UL DMRS group may be identified based at least on the antenna port with the smallest index in the UL DMRS included in the UL DMRS group. The UL PTRS may be mapped to the antenna port with the smallest index in one or more antenna ports that one codeword is mapped to. The UL PTRS may be mapped to a first layer when one codeword is at least mapped to the first layer and the second layer. The UL PTRS may not be mapped to the second layer. The index of the antenna port that the UL PTRS is mapped to may be obtained based at least on the downlink control information.

In Figure 1, the following downlink physical channels are used in the downlink radio communications from the base station device 3 to the terminal device 1. The downlink physical channel is used by the physical layer to transmit information output from a higher layer.
- PBCH (Physical Broadcast Channel)
- PDCCH (Physical Downlink Control Channel)
- PDSCH (Physical Downlink Shared Channel)

The PBCH is used at least for transmitting a master information block (MIB, BCH: Broadcast Channel). The PBCH may be transmitted based on a predetermined transmission interval. The PBCH may be transmitted with 80ms intervals. The PBCH may be transmitted with 160ms intervals. The content of the information included in the PBCH may be updated every 80ms. A part or all of the information included in the PBCH may also be updated every 160ms. The PBCH may be composed of 288 subcarriers. The PBCH may be composed of 2, 3, or 4 OFDM symbols included. The MIB may include information related to an identifier (index) of the synchronization signal. The MIB may include at least a part of the information indicating a slot number for transmitting the PBCH, a subframe number, and/or a radio frame number.

The PDCCH is used at least for transmitting of downlink control information (DCI). The PDCCH may be transmitted including at least the downlink control information. The PDCCH may include the downlink control information. The downlink control information may also be referred to as a DCI format. The downlink control information may include at least either a downlink grant or an uplink grant. The DCI format used for PDSCH scheduling is referred to as a downlink DCI format. The DCI format used for PUSCH scheduling is referred to as an uplink DCI format. A downlink grant is also referred to as a downlink assignment or a downlink allocation. The uplink DCI format includes at least one or both of DCI format 0_0 and DCI format 0_1.

The DCI format 0_0 includes at least a part or all of 1A to 1F.
1A) Identifier for DCI formats field
1B) Frequency domain resource assignment field
1C) Uplink Time domain resource assignment field
1D) Frequency hopping flag field
1E) MCS field (Modulation and Coding Scheme field)
1F) First CSI request field

The identifier for DCI formats field may be used at least to indicate which one of the one or more the DCI format that the DCI format included in the identifier for DCI formats field field corresponds to. The one or more DCI formats may be obtained based on at least a part or all of DCI format 1_0, DCI format 1_1, DCI format 0_0, and / or DCI format 0_1.

The frequency domain resource assignment field may be used at least to indicate frequency resource assignment for the PUSCH scheduled by the DCI format including the frequency domain resource assignment field.

The uplink time domain resource assignment field may be used at least to indicate the time resource assignment for the PUSCH scheduled by the DCI format including the uplink time domain resource assignment field.

The frequency hopping flag field may be used at least to indicate whether frequency hopping is applied to the PUSCH scheduled by the DCI format including the frequency hopping flag field.

The MCS field may be used at least to indicate a modulation scheme for the PUSCH scheduled by the DCI format including a part or all of the MCS field and/or the target coding rate. The target coding rate may be a target coding rate for a transport block of the PUSCH. The transport block size (TBS) may be obtained based at least on the target coding rate.

The first CSI request field is used at least to indicate the CSI report. The size of the first CSI request field may be a predetermined value. The size of the first CSI request field may be 0, may be 1, may be 2 or may also be 3.

The DCI format 0_1 is configured to include at least a part or all of 2A to 2H.
2A) Identifier for DCI formats field
2B) Frequency domain resource assignment field
2C) Uplink Time domain resource assignment field
2D) Frequency hopping flag field
2E) MCS field (Modulation and Coding Scheme field)
2F) Second CSI request field
2G) BWP field
2H) UL DAI field (Uplink Downlink Assignment Indicator field)

The BWP field may be used to indicate the uplink BWP of the PUSCH scheduled by the DCI format 0_1 is mapped.

The second CSI request field is used at least to indicate the CSI report. The size of the second CSI request field may be obtained based at least on the higher layer parameter ReportTriggerSize.

The UL DAI field may be at least used for generating a codebook of HARQ-ACK information. V^{UL}_{DAI} may be provided based at least on the value of the UL DAI field. V^{UL}_{DAI} may also be referred to as UL DAI.

The downlink DCI format includes at least one or both of DCI format 1_0 and DCI format 1_1.

The DCI format 1_0 includes at least a part or all of 3A to 31.
3A) Identifier for DCI formats field
3B) Frequency domain resource assignment field
3C) Downlink Time domain resource assignment field
3D) Frequency hopping flag field
3E) MCS field (Modulation and Coding Scheme field)
3F) First CSI request field
3G) PDSCH to HARQ feedback timing indicator field
3H) PUCCH resource indicator field
31) Counter DAI field (Counter Downlink Assignment Indicator field)

The downlink time domain resource assignment field may be used to indicate at least a part or all of the OFDM symbols of the timing K0, the DMRS mapping type, and the mapped PDSCH. When the index of the slot including the PDCCH is the slot n, the index of the slot including the PDSCH may be n+K0.

The PDSCH to HARQ feedback timing indication field may be a field indicating the timing K1. When the index of the slot including the last OFDM symbol of the PDSCH is the slot n, the index of the slot including PUCCH or PUSCH may be n+K1, wherein the PUCCH or PUSCH includes at least HARQ-ACK corresponding to the transport block included in the PDSCH. When the index of the slot including the last OFDM symbol of PDSCH is the slot n, the index of the slot including the first OFDM symbol of the PUCCH or the first OFDM symbol of the PUSCH may be n+K1, wherein the first OFDM symbol of the PUCCH or the first OFDM symbol of the PUSCH includes at least the HARQ-ACK corresponding to the transport block included in PDSCH.

The PUCCH resource indication field may be a field indicating an index of one or more PUCCH resources included in the PUCCH resource set.

The counter DAI field may be used at least for generating a codebook of HARQ-ACK information. V^{DL}_{C-DAI,c,m} may be given based at least on the value of the counter DAI field. V^{DL}_{C-DAI,c,m} is also referred to as counter DAI.

The DCI format 1_1 includes at least a part or all of 4A to 4K.
4A) Identifier for DCI formats field
4B) Frequency domain resource assignment field
4C) Downlink time domain resource assignment field
4D) Frequency hopping flag field
4E) MCS field (Modulation and Coding Scheme field)
4F) First CSI request field
4G) PDSCH to HARQ feedback timing indicator field
4H) PUCCH resource indicator field
4J) BWP field
4K) DAI field (Downlink Assignment Indicator field)

The BWP field may be used to indicate the downlink BWP of the PDSCH scheduled by the DCI format 1_1 is mapped.

The DAI field may be used at least for generating a codebook of HARQ-ACK information. V^{DL}_{T-DAI,m} may be obtained based at least on the value of the DAI field. V^{DL}_{C-DAI,c,m} may be obtained based at least on the value of the DAI field. V^{DL}_{T-DAI,m} is also referred to as a total DAI.

The DCI format 2_0 may be used at least to indicate the slot format. The slot format may be information indicating the transmission direction (downlink, uplink, or XXX) for each of the OFDM symbols composing a certain slot. XXX may be indicating no transmission direction.

In various implementations of the present disclosure, unless otherwise specified, the number of resource blocks indicates the number of resource blocks in the frequency domain.

One physical channel may be mapped to one serving cell. One physical channel may be mapped to one BWP configured for one carrier included in one serving cell.

The terminal device 1 may be configured with one or more control resource sets (CORESET). The terminal device 1 monitors the PDCCH in one or more control resource sets.

The control resource set may indicate a time-frequency domain that one or more PDCCH can be mapped to. The control resource set may be an area where the terminal device 1 monitors the PDCCH. The control resource set may be composed of localized resource. The control resource set may also be composed of distributed resource.

In the frequency domain, the unit of mapping of the control resource set may be a resource block. For example, in the frequency domain, the unit of mapping of the control resource set may be six resource blocks. In the time domain, the unit of mapping of the control resource set may be an OFDM symbol. For example, in the time domain, the unit of mapping of the control resource set may be 1 OFDM symbol.

The frequency domain of the control resource set may be obtained based on at least the higher layer signal and/or the downlink control information.

The time domain of the control resource set may be obtained based on at least the higher layer signal and/or the downlink control information.

A certain control resource set may be a common control resource set. The common control resource set may be a control resource set commonly configured for a plurality of terminal devices 1. The common control resource set may be obtained based at least on a part or all of the MIB, SIB, the common RRC signaling, and the cell ID. For example, the time resource and/or the frequency resource of the control resource set configured for monitoring the PDCCH used for scheduling of the SIB may be obtained based at least on the MIB.

A certain control resource set may be a dedicated control resource set. The dedicated control resource set may be a control resource set configured to be used exclusively for the terminal device 1. The dedicated control resource set may be obtained based at least on the dedicated RRC signaling.

The PDCCH candidate set monitored by the terminal device 1 may be defined in terms of a search area. In other words, the PDCCH candidate set monitored by the terminal device 1 may be obtained by the search area.

The search area may be composed of one or more PDCCH candidates of one or more aggregation levels included. The aggregation level of the PDCCH candidates may indicate the number of CCEs composing the PDCCH.

The terminal device 1 may monitor at least one or more search areas in a slot that the DRX (Discontinuous reception) is not configured. The DRX may be obtained based at least on the higher layer parameters. The terminal device 1 may monitor at least one or more search area sets in slots that DRX is not configured.

The search area set may be configured to include at least one or more of search areas. The type of the search area set may by at least one of a type 0 PDCCH common search area, a type 0a PDCCH common search area, a type 1 PDCCH common search area, a type 2 PDCCH common search area, a type 3 PDCCH common search area, and/or a UE specific PDCCH search.

The type 0 PDCCH common search area, the type 0a PDCCH common search area, the type 1 PDCCH common search area, the type 2 PDCCH common search area, and the type 3 PDCCH common search area are also referred to as CSS (Common Search Space). The UE specific PDCCH search area is also referred to as USS (UE specific Search Space).

Each of the search area sets may be at least associated with one control resource set. Each of the search area sets may be included in one control resource set. For each of the search area sets, an index of a control resource set associated with the search area set may be obtained.

A monitoring periodicity of the search area set may be set for each of the search area sets. The monitoring periodicity of the search area set may indicate at least the slot periodicity of the search area set monitoring performed by the terminal device 1. The higher layer parameter indicating at least the monitoring periodicity of the search area set may be obtained for each search area set.

A monitoring offset of the search area set may be set for each of the search area sets. The monitoring offset of the search area set may indicate least the offset from the reference index (for example, slot #0) of the slot of the search area set monitoring performed by the terminal device 1. The higher layer parameter indicating at least the monitoring offset of the search area set may be obtained for each search area set.

A monitoring pattern of the search area set may be set for each of the search area sets. The monitoring pattern of the search area set may indicate the first OFDM symbol for the search area set that the monitoring is performed. The monitoring pattern of the search area set may be obtained by a bitmap indicating the first OFDM symbol in one or more slots. The higher layer parameter indicating at least the monitoring pattern of the search area set may be obtained for each search area set.

The monitoring occasion of the search area set is obtained based on at least a part or all of the monitory periodicity of the search area set, the monitoring offset of the search area set, the monitoring pattern of the search area set, and/or the setting of DRX.

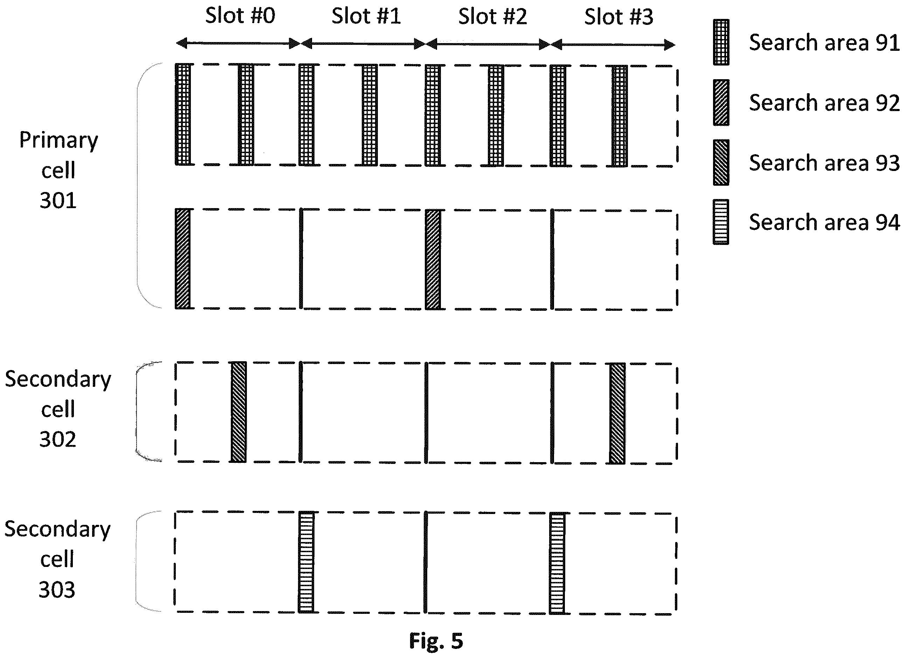

Figure 5 is a schematic diagram illustrating a monitoring occasion of a search area set according to an aspect of the present disclosure. In Figure 5, the search area set 91 and the search area set 92 are set in the primary cell 301, the search area set 93 is set in the secondary cell 302, and the search area set 94 is set in the secondary cell 303.

In Figure 5, a block indicated by grid lines indicates a search region set 91, a block indicated by diagonal lines rising to the right indicates a search region set 92, a block indicated by diagonal lines rising to the left indicates a search region set 93, and a block indicated by horizontal lines indicates a search area set 94.

The monitoring periodicity of the search area set 91 is set to 1 slot, the monitoring offset of the search area set 91 is set to 0 slot, and the monitoring pattern of the search area set 91 is set to [1, 0, 0, 0, 0, 0, 0, 1, 0, 0, 0, 0, 0, 0]. That is, the monitoring occasions of the search region set 91 are the first OFDM symbol (OFDM symbol # 0) and the eighth OFDM symbol (OFDM symbol # 7) in each slot.

The monitoring periodicity of the search area set 92 is set to 2 slots, the monitoring offset of the search area set 92 is set to 0 slot, and the monitoring pattern of the search area set 92 is set to [1, 0, 0, 0, 0, 0, 0, 0, 0, 0, 0, 0, 0, 0]. That is, the monitoring occasions of the search area set 92 is the first OFDM symbol (OFDM symbol # 0) in each of the even-numbered slots.

The monitoring periodicity of the search area set 93 is set to 2 slots, the monitoring offset of the search area set 93 is set to 0 slot, and the monitoring pattern of the search area set 93 is set to [0, 0, 0, 0, 0, 0, 0, 1, 0, 0, 0, 0, 0, 0]. That is, the monitoring occasions of the search region set 93 is the eighth OFDM symbol (OFDM symbol # 7) in each of the even-numbered slots.

The monitoring periodicity of the search area set 94 is set to 2 slots, the monitoring offset of the search area set 94 is set to 1 slot, and the monitoring pattern of the search area set 94 is set to [1, 0, 0, 0, 0, 0, 0, 0, 0, 0, 0, 0, 0, 0]. That is, the monitoring occasions of the search area set 94 is the first OFDM symbol (OFDM symbol # 0) in each of the odd-numbered slots.

The type 0 PDCCH common search area may be used at least for a DCI format with a CRC (Cyclic Redundancy Check) sequence scrambled by SI-RNTI (System Information-Radio Network Temporary Identifier). The setting of the type 0 PDCCH common search area may be obtained based on at least 4 bits of the LSB (Least Significant Bits) of the higher layer parameter PDCCH-ConfigSIB 1. The higher layer parameter PDCCH-ConfigSIB 1 may be included in the MIB. The setting of the type 0 PDCCH common search area may be obtained based at least on the higher layer parameter SearchSpaceZero. The interpretation of the bits of the parameter SearchSpaceZero of the v layer may be the same as the interpretation of the 4 bits of the LSB of the higher layer parameter PDCCH-ConfigSIB 1. The setting of the type 0 PDCCH common search area may be obtained based on at least the higher layer parameter SearchSpace SIB 1. The higher layer parameter SearchSpace SIB1 may be included in the higher layer parameter PDCCH-ConfigCommon. The PDCCH detected in the type 0 PDCCH common search area may be used at least for scheduling the PDSCH transmitted by including the SIB1. SIB1 is a type of SIB. SIB 1 may include scheduling information of SIBs other than SIB1. The terminal device 1 may receive the higher layer parameter PDCCH-ConfigCommon in EUTRA. The terminal device 1 may receive the higher layer parameter PDCCH-ConfigCommon in the MCG.

The type 0a PDCCH common search area may be used at least for a DCI format with a CRC (Cyclic Redundancy Check) sequence scrambled by SI-RNTI (System Information-Radio Network Temporary Identifier). The setting of the type 0a PDCCH common search area may be obtained based at least on the higher layer parameter SearchSpaceOtherSystemInformation. The higher layer parameter SearchSpaceOtherSystemInformation may be included in SIB 1. The higher layer parameter SearchSpaceOtherSystemInformation may be included in the higher layer parameter PDCCH-ConfigCommon. The PDCCH detected in the type 0 PDCCH common search area may be used at least for scheduling of PDSCH transmitted by including the SIBs other than SIB1.

The type 1 PDCCH common search area may be used at least for a DCI format with a CRC sequence scrambled by RA-RNTI (Random Access-Radio Network Temporary Identifier) and/or a CRC sequence scrambled by TC-RNTI (Temporary Network Temporary Identifier). The RA-RNTI may be obtained based at least on the time/frequency resource of the random access preamble transmitted by the terminal device 1. The TC-RNTI may be obtained by the PDSCH (may also be referred to as message 2 or random access response) scheduled by the DCI format with the CRC sequence scrambled by RA-RNTI. The type 1 PDCCH common search area may be obtained based at least on the higher layer parameter ra-SearchSpace. The higher layer parameter ra-SearchSpace may be included in SIB1. The higher layer parameter ra-SearchSpace may be included in the higher layer parameter PDCCH-ConfigCommon.

The type 2 PDCCH common search area may be used for a DCI format with a CRC sequence scrambled by P-RNTI (Paging-Radio Network Temporary Identifier). The P-RNTI may be used at least for transmission of the DCI format including information notifying the change of the SIB. The type 2 PDCCH common search area may be obtained based at least on the higher layer parameter PagingSearchSpace. The higher layer parameter PagingSearchSpace may be included in SIB1. The higher layer parameter PagingSearchSpace may be included in the higher layer parameter PDCCH-ConfigCommon.

The type 3 PDCCH common search area may be used for a DCI format with a CRC sequence scrambled by C-RNTI (Cell-Radio Network Temporary Identifier). The C-RNTI may be obtained based at least on the PDSCH (may also be referred to as message 4 or contention resolution) scheduled by the DCI format with the CRC sequence scrambled by the TC-RNTI. The type 3 PDCCH common search area may be a search area set obtained when the higher layer parameter SearchSpaceType is set to common.

The UE specific PDCCH search area may be used at least for the DCI format with the CRC sequence scrambled by the C-RNTI.

When the C-RNTI is provided to the terminal device 1, the type 0 PDCCH common search area, the type 0a PDCCH common search area, the type 1 PDCCH common search area, and/or the type 2 PDCCH common search area may be used at least for the DCI format with the CRC sequence scrambled by the C-RNTI.

When C-RNTI is provided to the terminal device 1, the search area set, that is obtained based at least on any one of the higher layer parameter PDCCH-ConfigSIBl, the higher layer parameter SearchSpaceZero, the higher layer parameter SearchSpaceSIB1, the higher layer parameter SearchSpaceOtherSystemInformation, the higher layer parameter ra-SearchSpace and the higher layer parameter PagingSearchSpace, may be used at least for the DCI format with the CRC sequence scrambled with the C-RNTI.

The common control resource set may include at least one or both of CSS and USS. The dedicated control resource set may include at least one or both of CSS and USS.

The physical resources of the search area are composed of the composition unit of the control channel, control channel elements (CCE). The CCE is composed of six resource element groups (REG). The REG may be composed of one OFDM symbol of one PRB (Physical Resource Block). That is, the REG may be composed of twelve resource elements (RE). The PRB is also simply referred to as an RB (Resource Block).

The PDSCH is used at least for transmitting a transport block. The PDSCH may be used at least for transmitting the random access message 2 (random access response). The PDSCH may be used at least for transmitting system information including parameters used for initial access.

In Figure 1, the following downlink physical signals are used in the downlink radio communications. The downlink physical signal may not be used for transmitting information output from a higher layer, but is used by the physical layer.
- Synchronization signal (SS)
- DL DMRS (DownLink DeModulation Reference Signal)
- CSI-RS (Channel State Information-Reference Signal)
- DL PTRS (DownLink Phase Tracking Reference Signal)

The synchronization signal is used for the terminal device 1 to synchronize in the downlink frequency domain and/or time domain. The synchronization signal includes PSS (Primary Synchronization Signal) and SSS (Secondary Synchronization Signal).

The SS block (SS/PBCH block) is composed of at least a part or all of the PSS, the SSS, and the PBCH. A part or all of the antenna ports of PSS, SSS, and PBCH included in the SS block may be the same. A part or all of the PSS, SSS, and PBCH included in the SS block may be mapped to consecutive OFDM symbols. The CP settings for a part or all of the PSS, SSS, and PBCH included in the SS block may be the same. The setting µ for each subcarrier spacing of a part or all of the PSS, SSS, and PBCH included in the SS block may be the same.

The DL DMRS is associated with to the transmission of PBCH, PDCCH and/or PDSCH. The DL DMRS is multiplexed on PBCH, PDCCH, and/or PDSCH. The terminal device 1 may use the PBCH, the PDCCH, or the DL DMRS corresponding to the PDSCH in order to perform channel correction of the PBCH, the PDCCH, or the PDSCH. Hereinafter, the transmission of both the PBCH and the DL DMRS associated with the PBCH may be simply referred to as the transmission of the PBCH. Furthermore, the transmission of both the PDCCH and the DL DMRS associated with the PDCCH may be simply referred to as the transmission of the PDCCH. Furthermore, the transmission of both PDSCH and DL DMRS associated with the PDSCH may be simply referred to as the transmission of PDSCH. The DL DMRS associated with PBCH may be referred to as the DL DMRS for PBCH. The DL DMRS associated with the PDSCH may be referred to as the DL DMRS for PDSCH. The DL DMRS associated with the PDCCH may be referred to as the DL DMRS associated with the PDCCH.

The DL DMRS may be a reference signal specifically set for the terminal device 1. The DL DMRS sequence may be obtained based at least on the parameters specifically set for the terminal device 1. The DL DMRS sequence may be obtained based at least on a UE-specific value (for example, C-RNTI, etc.). The DL DMRS may be transmitted specifically for PDCCH and/or PDSCH.

The CSI-RS may be a signal used at least for calculating channel state information. The CSI-RS type assumed by the terminal device may be obtained at least by the higher layer parameters.

The PTRS may be a signal used at least for phase noise compensation. The PTRS type assumed by the terminal device may be obtained based at least on the higher layer parameters and/or the DCI.

The DL PTRS may be associated with a DL DMRS group, which includes at least an antenna port used for one or more DL DMRS. The association between the DL PTRS and the DL DMRS group may be that a part or all of the antenna ports of the DL PTRS and the antenna ports included in the DL DMRS group are at least QCL. The DL DMRS group may be identified based on at least the antenna port with the smallest index in the DL DMRS included in the DL DMRS group.

The TRS may be a signal used at least for time and/or frequency synchronization. The TRS pattern assumed by the terminal device may be obtained based on at least the higher layer parameters and/or the DCI.

The downlink physical channel and the downlink physical signal are also referred to as a downlink signal. The uplink physical channel and the uplink physical signal are also referred to as an uplink signal. The downlink signal and the uplink signal are collectively referred to as a physical signal. The downlink signal and the uplink signal are also collectively referred to as a signal. The downlink physical channel and the uplink physical channel are collectively referred to as a physical channel. The downlink physical signal and the uplink physical signal are collectively referred to as a physical signal.

The BCH (Broadcast Channel), the UL-SCH (Uplink-Shared Channel) and the DL-SCH (Downlink-Shared Channel) are transport channels. A channel used in a medium access control (MAC) layer is referred to as a transport channel. The unit of the transport channel used in the MAC layer is also referred to as a transport block (TB) or MAC PDU. In the MAC layer, HARQ (Hybrid Automatic Repeat reQuest) control is performed for each transport block. The transport block is a unit of data that the MAC layer delivers to the physical layer. In the physical layer, the transport blocks are mapped to the codewords, and modulation processing is performed for each codeword.

The base station device 3 and the terminal device 1 exchange (transmit and receive) higher layer signals in the higher layer. For example, the base station device 3 and the terminal device 1 may transmit and receive the RRC signaling (RRC message: Radio Resource Control message, RRC information: Radio Resource Control information) in a radio resource control (RRC) layer. Furthermore, the base station device 3 and the terminal device 1 may transmit and receive MAC CE (Control Element) in the MAC layer. Here, the RRC signaling and/or the MAC CE are also referred to as the higher layer signaling.

The PUSCH and PDSCH may be at least used for transmitting RRC signaling and/or MAC CE. Here, the RRC signaling transmitted by the PDSCH from the base station device 3 may be a common signaling to a plurality of terminal devices 1 in the serving cell. The signaling common to a plurality of terminal devices 1 in a serving cell is referred to as common RRC signaling. The RRC signaling transmitted by the PDSCH from the base station device 3 may be signaling dedicated to a certain terminal device 1 (also referred to as dedicated signaling or UE specific signaling). The signaling dedicated to the terminal device 1 is also referred to as dedicated RRC signaling. The higher layer parameters specific to the serving cell may be transmitted using the common signaling to a plurality of terminal devices 1 in the serving cell or the dedicated signaling to a certain terminal device 1. The UE specific higher layer parameters may be transmitted to a certain terminal device 1 using the dedicated signaling.

The BCCH (Broadcast Control Channel), the CCCH (Common Control Channel), and the DCCH (Dedicated Control CHannel) are logical channels. For example, the BCCH is a higher layer channel used for transmitting MIB. Furthermore, the CCCH (Common Control CHannel) is a higher layer channel used for transmitting information common to a plurality of terminal devices 1. Here, the CCCH may be used, for example, for the terminal device 1 that is not connected to the RRC. Furthermore, the DCCH (Dedicated Control CHannel) is a higher layer channel used at least for transmitting the dedicated control information to the terminal device 1. Here, the DCCH may be used, for example, for the terminal device 1 connected to the RRC.

The BCCH in the logical channel may be mapped to the BCH, DL-SCH, or UL-SCH in the transport channel. The CCCH of a logical channel may be mapped to a DL-SCH or a UL-SCH in a transport channel. The DCCH of the logical channel may be mapped to the DL-SCH or UL-SCH in the transport channel.

The UL-SCH in transport channel may be mapped to the PUSCH in the physical channel. The DL-SCH of the transport channel may be mapped to the PDSCH in the physical channel. The BCH of the transport channel may be mapped to the PBCH in the physical channel.

One or more HARQ-ACK information may be multiplexed to the codebook. The codebook of HARQ-ACK information may be transmitted on PUCCH. The HARQ-ACK codebook may be transmitted on PUSCH.

A set of PDCCH monitoring occasions (association set) may be obtained for transmission of HARQ-ACK information transmitted on PUCCH in a certain slot. The set of PDCCH monitoring occasions includes M number of PDCCH monitoring occasions. The set of PDCCH monitoring occasions may be obtained based at least on one or both of timing K0 and/or timing K1. The set of PDCCH monitoring occasions may be obtained based at least on a part or all of the set of candidate values at timing K0 and/or the set of candidate values at timing K1. The set of candidate values for timing K0 may be obtained based at least on the higher layer parameters. The set of candidate values for the timing K1 may be obtained based at least on the higher layer parameters.

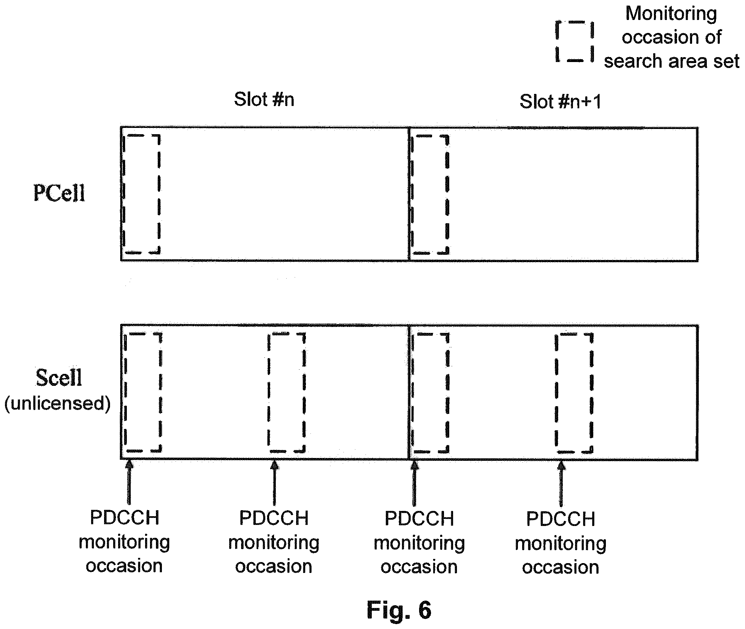

Figure 6 is a diagram illustrating an example of correspondence between the monitoring occasion for search space set and the monitoring occasion for PDCCH according to an aspect of the present disclosure. In Figure 6, the monitoring occasion of the search area set in the primary cell is the first OFDM symbol of the slot, and the monitoring occasion of the search area set in the secondary cell is the first OFDM symbol of the slot, and the OFDM symbol in the middle of the slot (for example, OFDM symbol #7). In Figure 6, the PDCCH monitoring occasion corresponds to the first OFDM symbol of slot #n and the OFDM symbol at the middle of slot #n, and the first OFDM symbol of slot #n+1 and the OFDM symbol at the middle of slot #n+1. That is, the PDCCH monitoring occasion may be defined as an occasion of a search area set monitoring occasion that is set in at least one of one or a plurality of serving cells. Furthermore, the PDCCH monitoring occasion may correspond to the index of the OFDM symbol of the search area set monitoring occasion that is set in at least one of one or a plurality of serving cells.

In a slot, the monitoring occasion of the search area set starting from a certain OFDM symbol index may correspond to the monitoring occasion of the PDCCH starting from the certain OFDM symbol index. The monitoring occasion of the PDCCH starting from a certain OFDM symbol index may correspond to each monitoring occasion of the search area set starting from a certain OFDM symbol index.

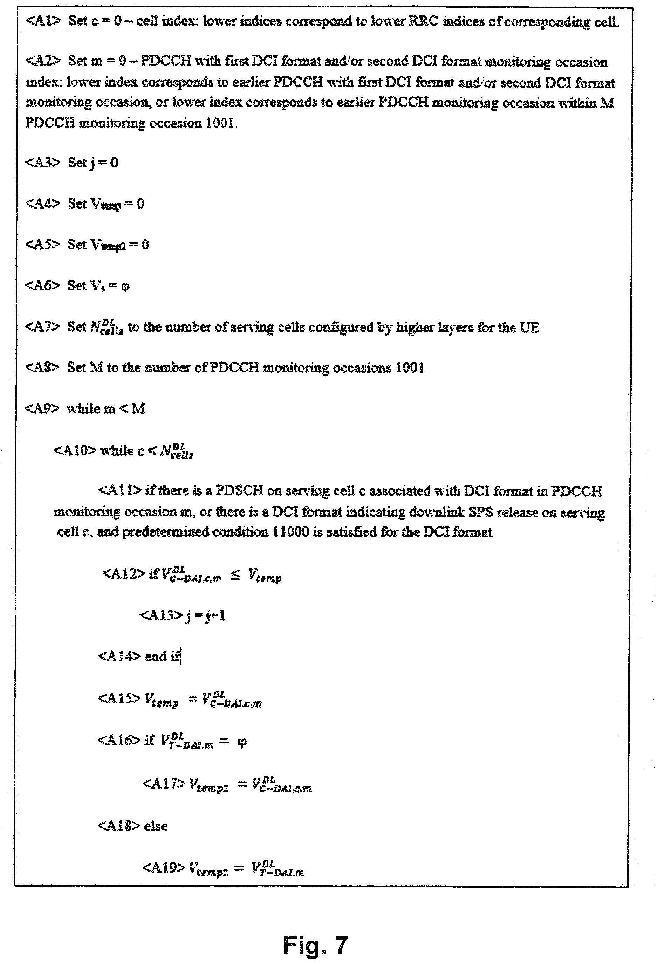

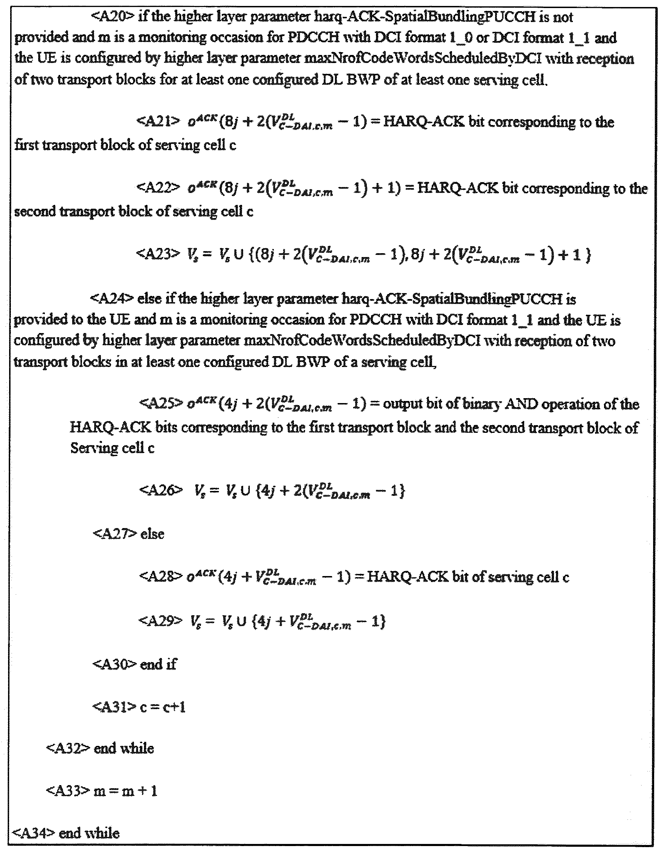

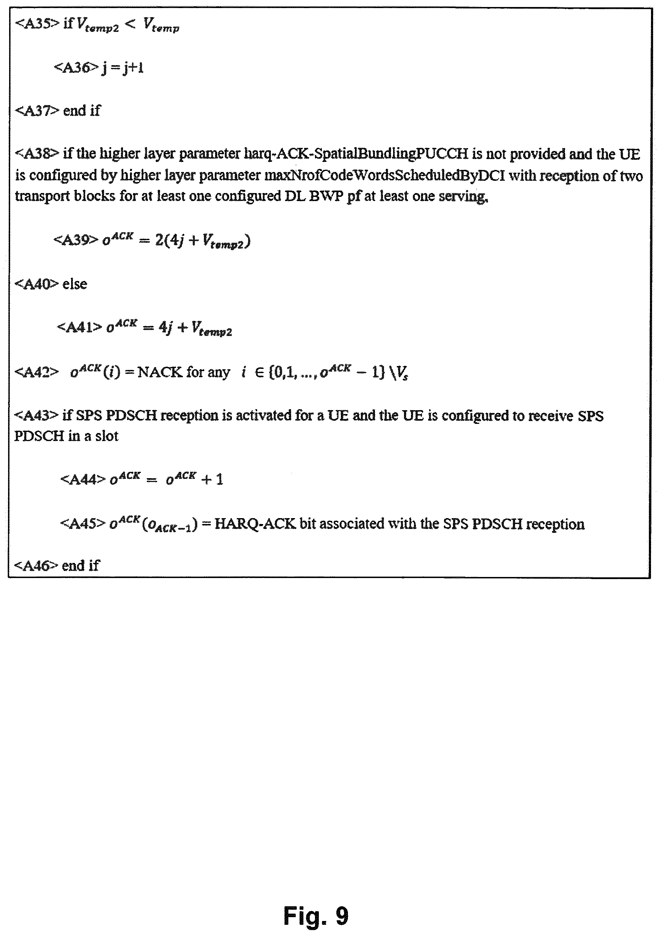

Figure 7, Figure 8 and Figure 9 are schematic diagrams illustrating examples of steps of composing the HARQ-ACK information codebook (HARQ-ACK codebook) according to one aspect of the present disclosure. <AX> in Figures 7, 8 and 9 is also referred to as step AX. In

Figures 7, 8 and 9, "A = B" may mean that A is set as B. In Figure 7, Figure 8 and Figure 9, "A = B" may also mean that B is input to A.

The HARQ-ACK information codebook may be obtained based at least on a part or all of steps A1 to A46.

The HARQ-ACK information codebook may be obtained based at least on a part or all of the PDCCH monitoring occasion set, the value of the UL DAI field, the value of the counter DAI field, and/or the DAI field.

The codebook of HARQ-ACK information may be obtained based at least on a part or all of the PDCCH monitoring occasion set, the UL DAI, the counter DAI, and/or the total DAI.

At Step A1, the serving cell index c is set to 0. The serving cell index may be obtained based on at least the higher layer parameters for each serving cell.

At Step A2, m=0 is set. m may indicate the index of the monitoring occasion of the PDCCH including the DCI format 1_0 or the DCI format 1_1.

At Step A3, j may be set to 0.

At Step A4, Vtemp may be set to zero.

At Step A5, Vtemp2 may be set to zero.

At Step A6, Vₛ = ϕ may be set. ϕ indicates an empty set.

At Step A7, N^{DL}_{cells} may be set to the number of serving cells. The number of serving cells may be the number of serving cells set in the terminal device 1.

At Step A8, M may be set to the number of PDCCH monitoring occasions.

At Step A9, the first evaluation expression m < M is evaluated. When the first evaluation expression is true, Step A10 may be performed. When the first evaluation expression is false, Step A34 may be performed.

At Step A10, the second evaluation formula c < N^{DL}_{cells} is evaluated. When the second evaluation expression is true, Step A11 may be performed. When the second evaluation expression is false, Step A33 may be performed.

At Step A11, when the predetermined condition 11000 is satisfied for the DCI format detected in the PDCCH monitoring occasion m in the serving cell c, Step A12 may be performed. At Step A11, when the DCI format is detected in the PDCCH monitoring occasion m in the serving cell c and the predetermined condition 11000 is satisfied for the DCI format, Step A12 may be performed.

At Step A11, when the predetermined condition 11000 is not satisfied for the DCI format detected in the PDCCH monitoring occasion m in the serving cell c, Step A30 may be performed. At Step A11, when the DCI format is not detected in the PDCCH monitoring occasion m in the serving cell c, Step A31 may be performed. At Step A11, when the DCI format is not detected in the PDCCH monitoring occasion m in the serving cell c, Step A31 may be performed.

At Step A12, the third evaluation expression V^{DL}_{C-DAI,c,m} ≤ Vₜₑₘₚ is evaluated. When the third evaluation formula is true, Step A13 may be performed. When the third evaluation expression is false, Step A14 may be performed.

V^{DL}_{C-DAI,c,m} is a value of a counter DAI (Downlink Assignment Index) obtained at least based on the PDCCH detected at the PDCCH monitoring occasion m in the serving cell c. The counter DAI indicates the cumulative number of PDCCHs (or may be a value at least related to the cumulative number) detected in the monitoring occasions of M PDCCHs up to the PDCCH monitoring occasion m in the serving cell c. In determining the cumulative number, the PDCCH index detected in M monitoring occasions may be obtained first as the serving cell index c and second as the PDCCH monitoring occasion m. That is, the PDCCH indexes detected in the M PDCCH monitoring occasions may be first mapped in the order of the serving cell index c and then in the PDCCH monitoring occasion m (serving cell index first, PDCCH monitoring occasion second mapping).

At Step A13, j may be set to j + 1.

Step A14 may be a step indicating the completion of the operation of the third evaluation expression at Step A12.

At Step A15, Vtemp may be set to V^{DL}_{C-DAI,c,m}.

At Step A16, the fourth evaluation expression V^{DL}_{T-DAI,m} = ϕ may be evaluated. When the fourth evaluation expression is true, Step A17 may be performed. When the fourth evaluation expression is false, Step A18 may be performed.

V^{DL}_{T-DAI,m} may be a total DAI value obtained at least based on the PDCCH detected at the PDCCH monitoring occasion m in the serving cell c. The total DAI may indicates the cumulative number of PDCCHs (or may be a value at least related to the cumulative number) detected in the monitoring occasions of M PDCCHs up to the PDCCH monitoring occasion m.

A codebook of HARQ-ACK information may be multiplexed on PUSCH scheduled based on at least DCI format 0_1, and if m = M-1, at least V^{DL}_{T-DAI,m} may be replaced by V^{UL}_{DAI}.

At Step A17, Vtemp2 may be set to V^{DL}_{C-DAI,c,m}.

At Step A18, Step A 19 may be performed.

At Step A19, Vtemp2 may be set to V^{DL}_{T-DAI,m}.

At Step A20, 1) the higher layer parameter harq-ACK-SpatialBundlingPUCCH is not provided; and 2) the PDCCH monitoring occasion m is a PDCCH monitoring occasion including DCI format 1_0 or DCI format 1_1; and 3) when the higher layer parameter maxNrofCodeWordsScheduledByDCI is set in at least one BWP in at least one serving cell, Step A21 may be performed. The higher layer parameter maxNrofCodeWordsScheduledByDCI may be information indicating whether transmission of two transport blocks on the PDSCH is supported.

At Step A21, o^{ACK}ₐ(8j+2(V^{DL}_{C-DAI,c,m}-1)) may be set to the value of the HARQ-ACK bit corresponding to the first transport block of the serving cell c. A HARQ-ACK bit value of 1 may indicate an ACK. A value of 0 in the HARQ-ACK bit may indicate NACK. The first transport block of the serving cell c is the first transport block included in the PDSCH scheduled by the DCI format included in the PDCCH detected in the PDCCH monitoring occasion m in the serving cell c.

At Step A22, o^{ACK}ₐ(8j+2(V^{DL}_{C-DAI,c,m}-1) +1) may be set to the value of the HARQ-ACK bit corresponding to the second transport block of the serving cell c. The second transport block of the serving cell c is the second transport block included in the PDSCH scheduled by the DCI format included in the PDCCH detected in the PDCCH monitoring occasion m in the serving cell c.

The PDSCH includes the first transport block and the PDSCH does not include the second transport block, and this may mean that the PDSCH includes one transport block.

At Step A22, 1) the PDSCH scheduled by the DCI format included in the PDCCH detected at the PDCCH monitoring occasion m in the serving cell c includes the first transport block; and 2) when the PDSCH does not include the second transport block, the second HARQ-ACK bit for the second transport block is set to NACK, and the second HARQ-ACK bit is set to o^{ACK}ₐ(8j+2(V^{DL}_{C-DAI,c,m}-1)+1).

At Step A23, Vs may be set to Vs ∪ {8j+2(V^{DL}_{C-DAI,c,m} -1), 8j+2(V^{DL}_{C-DAI,c,m} -1) +1}. Y U Z may represent the union of set Y and set Z. {*} May be a set including *.

At Step A24, 1) the higher layer parameter harq-ACK-SpatialBundlingPUCCH is provided; and 2) the PDCCH monitoring occasion m is a PDCCH monitoring occasion including DCI format 1_1; and 3) when the higher layer parameter maxNrofCodeWordsScheduledByDCI is set in at least one BWP in at least one serving cell, Step A25 may be performed.

At Step A25, o^{ACK}ₐ(4j+V^{DL}_{C-DAI,c,m} -1) may be set as a value obtained by binary AND operation of the first HARQ-ACK bit corresponding to the first transport block of the serving cell c, and the second HARQ-ACK bits corresponding the second transport of the serving cell c.

At Step A26, Vs may be set to Vs U {4j+V^{DL}_{C-DAI,c,m} -1}.

At Step A27, when the conditions of Step A20 and Step A24 are not satisfied, Step A28 may be performed. At Step A27, when the higher layer parameter maxNrofCodeWordsScheduledByDCI is not set in any BWP of any serving cell, Step A28 may be performed.

At Step A27, when the PDCCH monitoring occasion that is set with monitoring of DCI format 1_1 in at least one serving cell in at least M PDCCH monitoring occasions is included, and/or when at least a higher layer parameter Number-MCS-HARQ-DL-DCI is not set to indicate receiving two transport blocks on one PDSCH in the at least one serving cell, Step A28 may be performed.

At Step A28, o^{ACK}ₐ(4j+V^{DL}_{C-DAI,c,m} -1) may be set to the value of the first HARQ-ACK bit corresponding to the first transport block of the serving cell c. At Step A28, o^{ACK}ₐ(4j+V^{DL}_{C-DAI,c,m} -1) may be set to the value of the HARQ-ACK bit of the serving cell c.

At Step A29, Vs may be set to Vs U {4j+V^{DL}_{C-DAI,c,m} -1}.

Step A30 may be a step indicating the completion of the operation of Step A11.

At Step A31, c may be set to c+1.

At Step A32, Step 10 may be performed.

At Step A33, m may be set to m+1.

At Step A34, Step A9 may be performed.

At Step A35, the fifth evaluation expression Vtemp2 < Vtemp may be performed. When the fifth evaluation expression is true, Step A36 may be performed. When the fifth evaluation expression is false, Step A37 may be performed.

At Step A36, j may be set to j+1.

Step A37 may be a step indicating the completion of the operation of Step A35.

At Step A38, when 1) the higher layer parameter harq-ACK-SpatialBundlingPUCCH is not provided; and 2) the higher layer parameter maxNrofCodeWordsScheduledByDCI is set in at least one BWP in at least one serving cell, Step A21 may be performed.

At Step A39, O_{ACK} may be set to 2(4j+Vtemp2).

At Step A40, when at least the higher layer parameter harq-ACK-SpatialBundlingPUCCH is provided, Step A41 may be performed. At Step A40, when the higher layer parameter maxNrofCodeWordsScheduledByDCI is not set in any BWP in any serving cell, Step A41 may be performed.

At Step A41, O_{ACK} may be set to 4j+Vtemp2.

At Step A42, for i_{N} that satisfies i_{N} ∈ {0, 1, ... O^{ACK}-1} 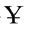 Vₛ, o^{ACK}ₐ(i_{N}) may be set to a value of NACK. V 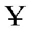 W may indicate a set obtained by subtracting the elements included in the set W from the set V. V 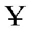 W may be the difference set of V and W.

At Step A43, when the PDSCH (SPS PDSCH) scheduled by the grant set in one or more slots in the monitoring occasion of M PDCCHs is set to be received, and the transmission of the SPS PDSCH is activated, Step A44 may be performed.

At Step A44, O^{ACK} may be set to O^{ACK}+1. At Step A44, O^{ACK} may be set to O^{ACK} + N_{SPS}. N_{SPS} may be the number of SPS PDSCHs that are set to be received in M PDCCH monitoring occasions 1001.

At Step A45, o^{ACK}ₐ(o^{ACK}ₐ -1) may be set to the value of the HARQ-ACK bit corresponding to the transport block included in the SPS PDSCH. At Step A45, o^{ACK}ₐ (o^{ACK}ₐ - i_{SPS}) may be set to the value of the HARQ-ACK bit corresponding to the transport block included in the SPS PDSCH. i_{SPS} may satisfy the condition of i_{SPS} ∈ {0, 1, ... , N_{SPS}-1} may be satisfied. At Step A45, o^{ACK}ₐ(o^{ACK}ₐ-1) is set to the value obtained by the binary AND operation of the HARQ-ACK bits corresponding to the transport block included in each of the one or more SPS PDSCHs received in the M PDCCH monitoring occasions.

Step A46 may be a step indicating the completion of the operation of Step A43.

The first evaluation expression to the fifth evaluation expression may also be referred to as evaluation expressions. The evaluation expression being true may mean that the evaluation expression is satisfied. The evaluation expression being false may mean that the evaluation expression is not true. The evaluation expression being false may mean that the evaluation expression is not satisfied.

Hereinafter, an example of a configuration of the terminal device 1 according to one aspect of the present disclosure will be described.

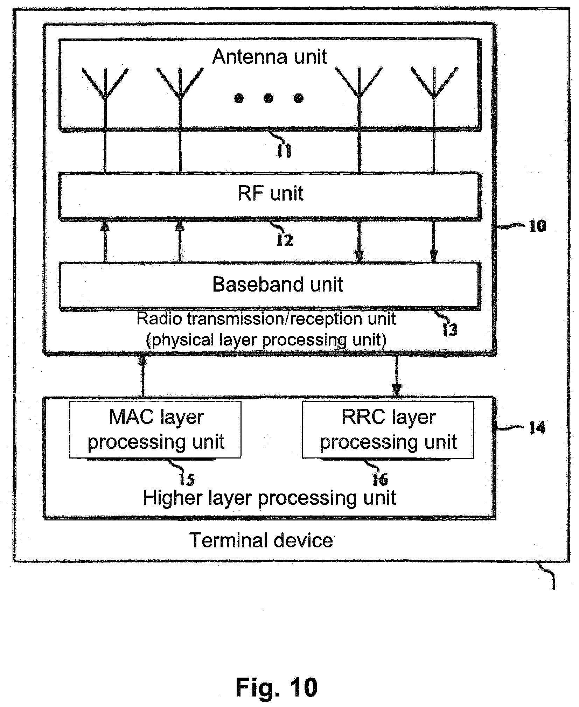

Figure 10 is a schematic block diagram of a configuration of a terminal device 1 according to an aspect of the present disclosure. As illustrated, the terminal device 1 includes a radio transmission/reception unit 10 and a higher layer processing unit 14. The radio transmission/reception unit 10 includes at least a part or all of an antenna unit 11, an RF (Radio Frequency) unit 12, and a baseband unit 13. The higher layer processing unit 14 is configured to include at least a part or all of a medium access control layer processing unit 15 and a radio resource control layer processing unit 16. The radio transmission/reception unit 10 is also referred to as a transmission unit, a reception unit, or a physical layer processing unit.

The higher layer processing unit 14 outputs the uplink data (transport block) generated by a user operation or the like to the radio transmission/reception unit 10. The higher layer processing unit 14 performs processing of a MAC layer, a packet data convergence protocol (PDCP) layer, a radio link control (RLC) layer, and an RRC layer.

The medium access control layer processing unit 15 included in the higher layer processing unit 14 performs processing of the MAC layer.

The radio resource control layer processing unit 16 included in the higher layer processing unit 14 performs processing of the RRC layer. The radio resource control layer processing unit 16 manages various configuration information/parameters of the own device. The radio resource control layer processing unit 16 configures various configuration information/parameters based on the higher layer signal received from the base station device 3. In other words, the radio resource control layer processing unit 16 configures various configuration information/parameters based on the information indicating various configuration information/parameters received from the base station device 3. Furthermore, the configuration information may include information related to processing or configuring of a physical channel, a physical signal (i.e., a physical layer), a MAC layer, a PDCP layer, an RLC layer, and an RRC layer. The parameter may also be a higher layer parameter.

The radio transmission/reception unit 10 performs physical layer processing, such as modulation, demodulation, encoding, and decoding. The radio transmission/reception unit 10 separates, demodulates, and decodes the received physical signal, and outputs the information to the higher layer processing unit 14. The radio transmission/reception unit 10 generates a physical signal by modulating data, encoding, and generating a baseband signal (conversion to a time continuous signal), and transmits the physical signal to the base station device 3.

The RF unit 12 converts a signal received via the antenna unit 11 into a baseband signal (down-convert) by quadrature demodulation, and removes undesirable frequency components. The RF unit 12 outputs the processed analog signal to the baseband unit.

The baseband unit 13 converts the analog signal input from the RF unit 12 into a digital signal. The baseband unit 13 removes a portion that corresponds to CP (Cyclic Prefix) from the converted digital signal, performs fast Fourier transform (FFT) to the signal that the CP has been removed, and extracts the signal in the frequency domain.

The baseband unit 13 performs an inverse fast Fourier transform (IFFT) on the data, generates an OFDM symbol, appends a CP to the generated OFDM symbol, generates a baseband digital signal, and converts the baseband digital signal into an analog signal. The baseband unit 13 outputs the converted analog signal to the RF unit 12.

The RF unit 12 removes undesirable frequency components from the analog signal input from the baseband unit 13 using a low pass filter, up-converts the analog signal to a carrier frequency, and transmits the analog signal via the antenna unit 11. Furthermore, the RF unit 12 amplifies the power. Furthermore, the RF unit 12 may include a function of controlling the transmission power. The RF unit 12 is also referred to as a transmission power control unit.

Hereinafter, an example of the configuration of the base station device 3 according to one aspect of the present disclosure will be described.

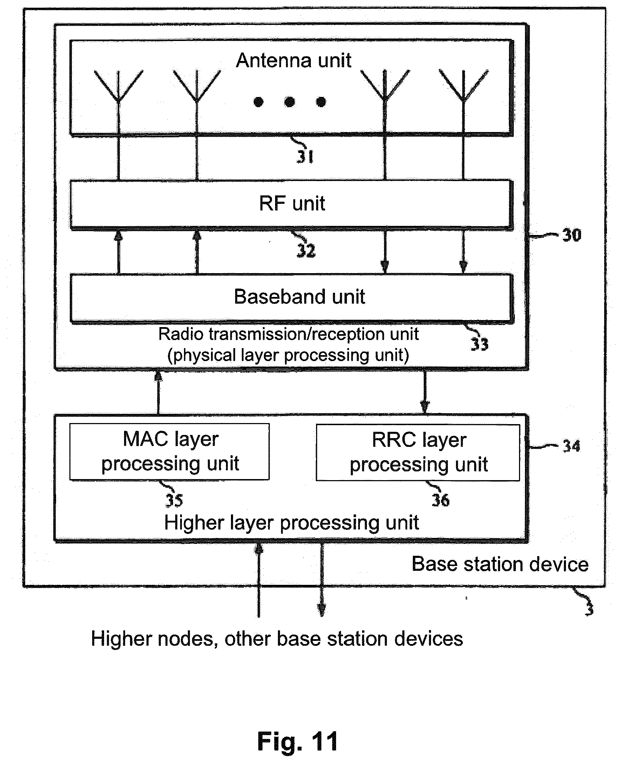

Figure 11 is a schematic block diagram of a configuration of a base station device 3 according to an aspect of the present disclosure. As illustrated, the base station device 3 is composed of a radio transmission/reception unit 30 and a higher layer processing unit 34. The radio transmission/reception unit 30 includes an antenna unit 31, an RF unit 32, and a baseband unit 33. The higher layer processing unit 34 includes a medium access control layer processing unit 35 and a radio resource control layer processing unit 36. The radio transmission/reception unit 30 is also referred to as a transmission unit, a reception unit, or a physical layer processing unit.

The higher layer processing unit 34 performs processing of the MAC layer, PDCP layer, RLC layer, and RRC layer.

The medium access control layer processing unit 35 included in the higher layer processing unit 34 performs processing of the MAC layer.

The radio resource control layer processing unit 36 included in the higher layer processing unit 34 performs processing of the RRC layer. The radio resource control layer processing unit 36 generates downlink data (transport block), system information, RRC message, MAC CE, and others configured in the PDSCH, or acquires the data from the higher node, and outputs the data to the radio transmission/reception unit 30. Furthermore, the radio resource control layer processing unit 36 manages various configuration information/parameters of each terminal device 1. The radio resource control layer processing unit 36 may configure various configuration information/parameters for each of the terminal devices 1 via a higher layer signal. In other words, the radio resource control layer processing unit 36 transmits/reports information indicating various configuration information/parameters.

The functions of the radio transmission/reception unit 30 is the same as those of the radio transmission/reception unit 10, and will not be repeated here.

Each of the units denoted with reference numerals 10 to 16 included in the terminal device 1 may be composed of a circuit. Each of the units denoted with reference numerals 30 to 36 included in the base station device 3 may be composed of a circuit. A part or all the units denoted with reference numerals 10 to 16 included in the terminal device 1 may be composed of a memory and a processor connected to the memory. A part or all of the units denoted with reference numerals 30 to 36 included in the base station device 3 may be composed of a memory and a processor connected to the memory. Various aspects (operations, processes) according to the present disclosure may be realized (implemented) in the memory included in the terminal device 1 and/or the base station device 3 and the processor connected to the memory.

Hereinafter, various aspects of the present disclosure will be described.

In various aspects of the present disclosure, the terminal device 1 may perform carrier sense before transmitting the physical signal. Furthermore, the base station device 3 may also perform carrier sense before transmitting the physical signal. Carrier sense may be to implement energy detection in a radio channel. Based on the carrier sense performed prior to the transmission of the physical signal, whether the transmission of the physical signal can be performed may be obtained. For example, when the energy detected by the carrier sense performed prior to the transmission of the physical signal is larger than a predetermined threshold value, the transmission of the physical channel may not be performed, or the transmission may be determined to be not possible. Furthermore, when the energy detected by the carrier sense performed prior to the transmission of the physical signal is smaller than a predetermined threshold value, the transmission of the physical channel may be performed, or the transmission may be determined to be possible. Furthermore, when the energy detected by the carrier sense performed prior to the transmission of the physical signal is equal to the predetermined threshold value, the transmission of the physical channel may or may not be performed. That is, when the energy detected by the carrier sense performed prior to the transmission of the physical signal is equal to the predetermined threshold value, the transmission may be determined to be not possible or the transmission may be determined to be possible.

The procedure of obtaining whether to perform the transmission of the physical channel based on carrier sense may be referred to as LBT (Listen Before Talk). As a result of the LBT, the situation in which it is determined that the physical signal cannot be transmitted is also referred to as a busy state or busy. For example, the busy state may be a state that the energy detected by carrier sense is larger than a predetermined threshold value. Furthermore, as a result of the LBT, the situation in which it is determined that the physical signal can be transmitted is also referred to as an idle state or idle. For example, the idle state may be a state that the energy detected by carrier sense is smaller than a predetermined threshold value.

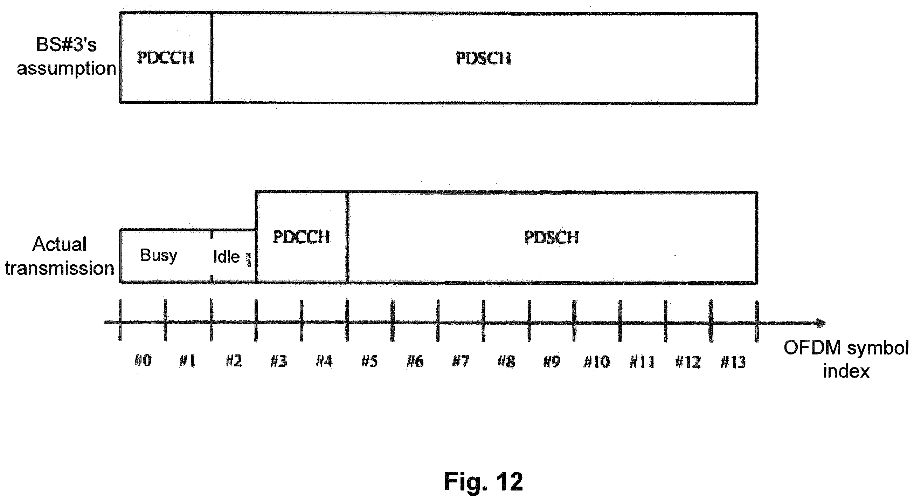

Figure 12 is a schematic diagram illustrating an example of transmission of the physical signal according to an aspect of the present disclosure. In Figure 12, the base station device 3 is assumed to start transmitting on the PDCCH in OFDM symbol #0 and the PDSCH in OFDM symbol #2 (assumption of BS #3). On the other hand, as a result of the LBT procedure performed prior to the transmission of the PDCCH, the OFDM symbol #0 and the OFDM symbol #1 are in the busy state, and the OFDM symbol #2 is in the idle state. Therefore, the actual transmission of the PDCCH starts from OFDM symbol #3.

As shown in Figure 12, when the LBT procedure is performed prior to the transmission of the physical signal, there might be differences between the assumption of the transmission of the physical signal and the actual transmission of the physical signal. On the other hand, even if there is a difference between the assumption of the transmission of the physical signal and the actual transmission of the physical signal, the configuration of the physical signal (the content of the information bit sequence transmitted by the physical signal, the size of the information bit sequence, mapping of modulation symbols, etc.) should not be changed. Changing the configuration of the physical signal with the LBT procedure may result in an increase in the load of the device (the terminal device 1 or the base station device 3) that transmits the physical signal.

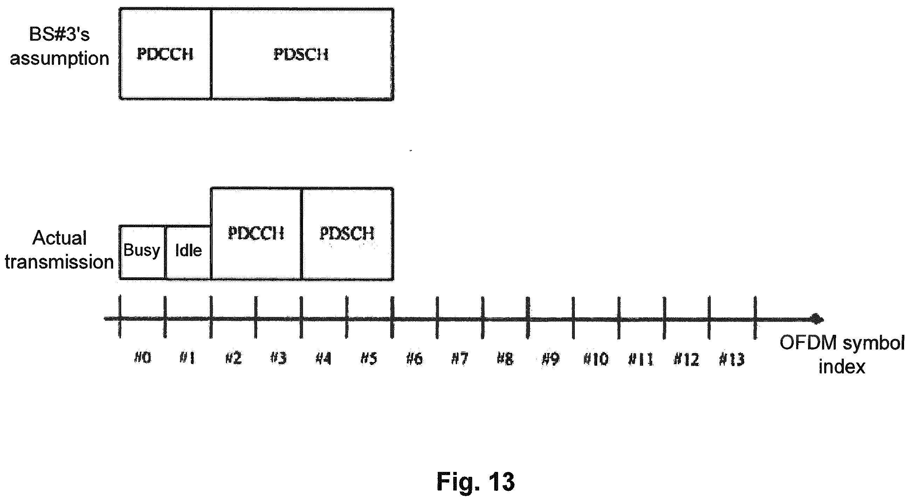

Figure 13 is a schematic diagram illustrating an example of transmission of the physical signal according to an aspect of the present disclosure. In Figure 13, the base station device 3 is assumed to start transmitting on the PDCCH in OFDM symbol #0 and the PDSCH in OFDM symbol #2 (assumption of BS #3). On the other hand, as a result of the LBT procedure performed prior to the transmission of the PDCCH, the OFDM symbol #0 is in the busy state, and the OFDM symbol #1 is in the idle state. Therefore, the actual transmission of the PDCCH starts from OFDM symbol #2.

In Figure 13, the time domain resource assignment field included in the DCI format included in the PDCCH may at least indicate that PDSCH transmission starts in OFDM symbol #2, and the number of OFDM symbols (duration) of the PDSCH is 4 OFDM symbols. On the other hand, OFDM symbol #2 and OFDM symbol #3 are used for PDCCH transmission, the actual transmission of PDSCH may be started from OFDM symbol # 4.

In this way, in a system that carrier sense is performed prior to transmission of a physical signal or in another system, delaying the transmission of the PDCCH may be supported. Delaying the transmission of the PDCCH means that the PDCCH intended to be transmitted on one monitoring occasion is transmitted on a different monitoring occasion. That is, in a system that delaying the transmission of the PDCCH is supported, it is preferable to support the delay of transmitting the PDCCH in the generation of the HARQ-ACK information codebook.

For example, the first monitoring occasion and the second monitoring occasion may be set. The PDCCH may be detected in the second monitoring occasion, and assuming that the PDCCH is detected in the first monitoring occasion, then the HARQ-ACK information codebook is generated.

The generation of the codebook of HARQ-ACK information assuming that the PDCCH is detected at a certain monitoring occasion may mean that the HARQ-ACK information is detected assuming that the PDCCH is detected at the monitoring occasion of the PDCCH corresponding to the certain monitoring occasion. The generation of the codebook of HARQ-ACK information assuming that the PDCCH is detected at a certain monitoring occasion may mean that the counter DAI and/or the total DAI included in the DCI format included in the PDCCH is used at the monitoring occasion of the PDCCH corresponding to the certain monitoring occasion.

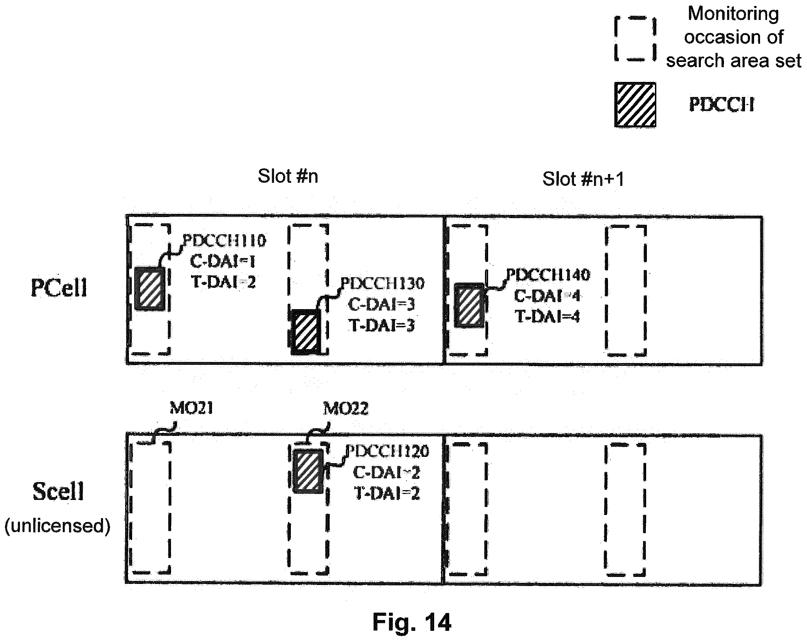

Figure 14 is a schematic diagram illustrating an example of downlink communications according to an aspect of the present disclosure. In Figure 14, for each of the primary cell and the secondary cell, two monitoring occasions of a search area set are set for each slot, and the monitoring occasion set of the PDCCH for the HARQ-ACK information codebook is the monitoring occasion including four PDCCHs. In Figure 14, a block indicated by dotted line frame is a monitoring occasion of a search area set, and a block indicated by diagonal lines is an example of the PDCCH transmitted by the base station device 3 (PDCCH 110, PDCCH 120, PDCCH 130, and PDCCH 140). In Figure 14, each PDCCH indicates each of counter DAI (C-DAI) and total DAI (T-DAI).

In Figure 14, the monitoring occasion of the search area set at the beginning of slot #n is MO (Monitoring Occasion) 21, and the monitoring occasion of the second search area set of slot #n is MO 22. Furthermore, the PDCCH 120 was predetermined to be transmitted by the MO 21, however it is assumed that the PDCCH 120 is not transmitted by the MO 21 due to LBT or other reasons, it is transmitted by the MO 22. Since a difference has occurred during the transmission of the PDCCH 120, a problem is occurred in generating the codebook of HARQ-ACK information. For example, the PDCCH 130 and PDCCH 120 may be detected in the second monitoring occasion of the PDCCH in slot #n, but each of the total DAI values are different. The total DAI may indicate mean indicate the cumulative number of PDCCHs transmitted up to a certain PDCCH monitoring occasion, therefore, this may also be an error.

Therefore, it is preferable to assume that the values of the counter DAI and the total DAI indicated by the PDCCH 120 detected in MO22 are detected in MO21, and generate the codebook of HARQ-ACK information.

For example, the first monitoring occasion and/or the second monitoring occasion may be included in the set of PDCCH monitoring occasions. Furthermore, it may be that, the first monitoring occasion is included in the set of PDCCH monitoring occasions, and the second monitoring occasion is not included in the set of PDCCH monitoring occasions.

For example, the first monitoring occasion may be set prior to the second monitoring occasion.

For example, the second monitoring occasion may at least satisfy a part or all of the Conditions (1) to (4).
Condition (1): an initial signal is detected in the OFDM signal or slot corresponding to the second monitoring occasion
Condition (2): a predetermined DCI format is received in the OFDM signal or slot corresponding to the second monitoring occasion
Condition (3): the second monitoring occasion is the first monitoring occasion after the beginning of the channel occupancy time (COT) in the set of PDCCH monitoring occasions
Condition (4): The second monitoring occasion is a monitoring occasion included in the first slot of the channel occupation time in the set of PDCCH monitoring occasions

For example, the PDCCH may be detected in the third monitoring occasion, and the codebook of HARQ-ACK information may be generated based on the detection of the PDCCH in the third monitoring occasion. For example, the third monitoring occasion may not satisfy at least a part or all of the Conditions (1) to (4).

For example, whether to detect the PDCCH in a predetermined monitoring occasion may be determined based at least on the type of the predetermined monitoring occasion, and assuming that the PDCCH is detected in the first monitoring occasion, the codebook of HARQ-ACK information is generated. For example, when the predetermined monitoring occasion is the second monitoring occasion, it may be assumed that the PDCCH is detected in the first monitoring occasion, the HARQ-ACK information codebook may be generated. Furthermore, when the predetermined monitoring occasion is the third monitoring occasion, the codebook of HARQ-ACK information may be generated based on that the PDCCH is detected at the predetermined monitoring occasion.

For example, whether to detect the PDCCH in a predetermined monitoring occasion may be determined based at least on the type of the search area set of the predetermined monitoring occasion, and assuming that the PDCCH is detected in the first monitoring occasion, the codebook of HARQ-ACK information is generated.

the codebook of HARQ-ACK information being generated based on the PDCCH is detected in a certain monitoring occasion may be that the counter DAI and/or the total DAI included in the DCI format included in the PDCCH is detected in the monitoring occasion of the PDCCH corresponding to the certain monitoring occasion.

For example, whether the PDCCH is detected in the second monitoring occasion may be determined based at least on whether the second monitoring occasion is set to a beginning area of channel occupancy time, and assuming that the PDCCH is detected in the first monitoring occasion, the codebook of HARQ-ACK information is generated. The beginning area of the channel occupancy time may correspond to the beginning slot of the channel occupancy time. For example, when the second monitoring occasion is set in the beginning area of the channel occupancy time, and assuming that the PDCCH is detected in the first monitoring occasion, the codebook of HARQ-ACK information is generated. Furthermore, when the second monitoring occasion is set to an area other than the beginning area of the channel occupancy time, and based on that the PDCCH is detected in the second monitoring occasion, the codebook of HARQ-ACK information is generated.

For example, whether the PDCCH is detected in the second monitoring occasion may be determined based at least on the type of frequency band of the serving cell, and assuming that the PDCCH is detected in the first monitoring occasion, the codebook of HARQ-ACK information is generated. For example, when the frequency band of the serving cell as set is an unlicensed band, and assuming that the PDCCH is detected in the first monitoring occasion, the codebook of HARQ-ACK information is generated. Furthermore, when the frequency band of the serving cell as set is different from the unlicensed band, based on the PDCCH is detected in the second monitoring occasion, the codebook of HARQ-ACK information is generated. Herein, the second monitoring occasion may be set in the serving cell.

For example, whether the PDCCH is detected in the second monitoring occasion may be determined based at least on the type of the serving cell, and assuming that the PDCCH is detected in the first monitoring occasion, the codebook of HARQ-ACK information is generated. For example, when the serving cell is used in the serving cell of an unlicensed band, and assuming that the PDCCH is detected in the first monitoring occasion, the codebook of HARQ-ACK information is generated. Furthermore, when the serving cell is used in the serving cell of a frequency band different from the unlicensed band, based on the PDCCH is detected in the second monitoring occasion, the codebook of HARQ-ACK information is generated.

For example, whether the PDCCH is detected in the second monitoring occasion may be determined based at least on whether an initial signal is detected in the OFDM symbol that sets the second monitoring occasion, and assuming that the PDCCH is detected in the first monitoring occasion, the codebook of HARQ-ACK information is generated. For example, when an initial signal is detected in the OFDM symbol that sets the second monitoring occasion, and assuming that the PDCCH is detected in the first monitoring occasion, the codebook of HARQ-ACK information is generated. Furthermore, when an initial signal is not detected in the OFDM symbol that sets the second monitoring occasion, based on the PDCCH is detected in the second monitoring occasion, the codebook of HARQ-ACK information is generated.

For example, whether the PDCCH is detected in the second monitoring occasion may be determined based at least on whether an initial signal is detected in the slot that sets the second monitoring occasion, and assuming that the PDCCH is detected in the first monitoring occasion, the codebook of HARQ-ACK information is generated. For example, when an initial signal is detected in the slot that sets the second monitoring occasion, and assuming that the PDCCH is detected in the first monitoring occasion, the codebook of HARQ-ACK information is generated. Furthermore, when an initial signal is not detected in the slot that sets the second monitoring occasion, based on the PDCCH is detected in the second monitoring occasion, the codebook of HARQ-ACK information is generated.

For example, whether the PDCCH is detected in the second monitoring occasion may be determined based at least on whether a predetermined DCI format is detected in the OFDM symbol that sets the second monitoring occasion, and assuming that the PDCCH is detected in the first monitoring occasion, the codebook of HARQ-ACK information is generated. For example, when an initial signal is detected in the predetermined DCI format that sets the second monitoring occasion, and assuming that the PDCCH is detected in the first monitoring occasion, the codebook of HARQ-ACK information is generated. Furthermore, when an initial signal is not detected in the predetermined DCI format that sets the second monitoring occasion, based on the PDCCH is detected in the second monitoring occasion, the codebook of HARQ-ACK information is generated.

For example, whether the PDCCH is detected in the second monitoring occasion may be determined based at least on whether a predetermined DCI format is detected in the slot that sets the second monitoring occasion, and assuming that the PDCCH is detected in the first monitoring occasion, the codebook of HARQ-ACK information is generated. For example, when a predetermined DCI format is detected in the slot that sets the second monitoring occasion, and assuming that the PDCCH is detected in the first monitoring occasion, the codebook of HARQ-ACK information is generated. Furthermore, when a predetermined DCI format is not detected in the slot that sets the second monitoring occasion, based on the PDCCH is detected in the second monitoring occasion, the codebook of HARQ-ACK information is generated.

For example, the initial signal may be a physical signal. Furthermore, the initial signal may be a DMRS associated with the PDCCH. Furthermore, the initial signal may be a DMRS associated with a PDCCH including a predetermined DCI format. For example, the predetermined DCI format may be DCI format 2_0. For example, the initial signal may be a synchronization signal. Furthermore, the initial signal may be CSI-RS.

For example, based at least on whether an initial signal is detected, a monitoring occasion to perform monitoring may be obtained. For example, prior to an initial signal is detected, at least the second monitoring occasion may be monitored. After the initial signal is detected, at least the first monitoring occasion may be monitored.

For example, the first monitoring occasion may be set by the first search area set. Furthermore, the first search area set may be CSS. Furthermore, the first search area set may be a type 3 PDCCH common search area. Furthermore, the monitoring occasion of the search area set that is set by the first search area set may not be used for monitoring the PDCCH, and used for setting the monitoring occasion of the PDCCH. Furthermore, the first search area set may be a search area set monitored in the COT. That is, whether the PDCCH is monitored in the monitoring occasion of the search area set that is set by the first search area set is determined based at least on whether the monitoring occasion of the search area set is within the COT. Furthermore, the first search area set may be a search area set monitored in an area indicating as downlink according to DCI format 2_0. That is, whether the PDCCH is monitored in the monitoring occasion of the search area set that is set by the first search area set is determined based at least on whether the OFDM symbol of the monitoring occasion of the search area set is a downlink according to DCI format 2_0.

For example, the second monitoring occasion may be set by the second search area set. Furthermore, the second search area set may be USS. Furthermore, the monitoring occasion of the search area set that is set by the second search area set may not be used for monitoring the PDCCH, and used for setting the monitoring occasion of the PDCCH. Furthermore, the second search area set may be a search area set not monitored in the COT. That is, whether the PDCCH is monitored in the monitoring occasion of the search area set that is set by the second search area set is determined based at least on whether the monitoring occasion of the search area set is within the COT. Furthermore, the second search area set may be a search area set monitored in an area where the slot format is not indicated according to DCI format 2_0. That is, whether the PDCCH is monitored in the monitoring occasion of the search area set that is set by the second search area set is determined based at least on whether the OFDM symbol of the monitoring occasion of the search area set indicates the slot format according to DCI format 2_0.

For example, the first monitoring occasion and the second monitoring occasion may be set by the first search area set. Furthermore, the first parameter set used for setting the first monitoring occasion may at least include a part or all of the monitoring periodicity of the first search area set, the monitoring offset of the first search area set, and the monitoring pattern of the first search area set. Furthermore, the second parameter set used for setting the second monitoring occasion may at least include a part or all of the monitoring periodicity of the second search area set, the monitoring offset of the second search area set, and the monitoring pattern of the second search area set.

For example, the first monitoring occasion and the second monitoring occasion may be set by the first search area set. Furthermore, the first monitoring occasion may be a predetermined monitoring occasion of the monitoring occasion of the search area set that is set by the first search area set. Furthermore, the predetermined monitoring occasion may be a monitoring occasion at the beginning of the slot. Furthermore, the second monitoring occasion may include at least a part or all of the monitoring occasions of the search area set other than the predetermined monitoring occasion of the monitoring occasion of the search area set that is set by the first search area set.

The counter DAI and/or the total DAI indicated by the PDCCH detected in the first monitoring occasion are used at least to generate the codebook of HARQ-ACK information, and the counter DAI and/or the total DAI indicated by the PDCCH detected at the second monitoring occasion may not be used to generate the codebook of the HARQ-ACK information. That is, the codebook of HARQ-ACK information may be generated regardless of the counter DAI and/or the total DAI indicated by the PDCCH detected in the second monitoring occasion.

For example, whether the counter DAI and/or the total DAI indicated by the PDCCH is used for generating the codebook of HARQ-ACK information may be determined based at least on detecting the monitoring occasion of the search area set of the PDCCH.

For example, the HARQ-ACK information corresponding to the PDCCH detected in the second monitoring occasion may be set at the end of the codebook of HARQ-ACK information. Furthermore, the HARQ-ACK information corresponding to the PDCCH detected in the second monitoring occasion may be set after the codebook of the HARQ-ACK information and before the HARQ-ACK information corresponding to the SPS PDSCH. Furthermore, the HARQ-ACK information corresponding to the PDCCH detected in the second monitoring occasion may be set before the codebook of the HARQ-ACK information.

The value of the counter DAI included in the DCI format included in the PDCCH detected in the second monitoring occasion is used to generate the codebook of HARQ-ACK information, and the value of the total DAI included in the DCI format may not be used to generate the codebook of HARQ-ACK information.

For example, when the PDCCH is detected in the second monitoring occasion, receiving the PDSCH scheduled based on at least the PDCCH may not be performed. When receiving the PDSCH is not performed, the counter DAI and/or the total DAI included in the DCI format included in the PDCCH may be used to generate the codebook of HARQ-ACK information.

Hereinafter, examples of various devices according to one aspect of the present disclosure will be described.
(1) In order to achieve the above, the present disclosure implements the following method. That is, the first aspect of the present disclosure is a terminal device, comprising: a reception unit that sets a first monitoring occasion and a second monitoring occasion for a PDCCH, and receives the PDCCH in at least the second monitoring occasion; and a transmission unit that, assuming the PDCCH is detected in the first monitoring occasion, generates a HARQ-ACK codebook on the basis of a value of a DAI field included in the PDCCH, and transmitting the HARQ-ACK codebook via a PUCCH or a PUSCH.
(2) Furthermore, in the first aspect of the present disclosure, a monitoring occasion set corresponding to the PUCCH (association set) is obtained at least based on K0 and K1, the K0 is used to indicate that an index of a slot of the PDSCH scheduled based on the PDCCH is transmitted, the K1 is used to indicate that an index of a slot of the PUCCH is transmitted, the first monitoring occasion and the second monitoring occasion are included in the monitoring occasion set.
(3) Furthermore, in the first aspect of the present disclosure, the first monitoring occasion is set prior to the second monitoring occasion, the second monitoring occasion satisfies at least one of the conditions (1) to (3), condition (1) is that an initial signal is detected in the OFDM symbol corresponding to the second monitoring occasion, condition (2) is that the predetermined DCI format is received in the second monitoring occasion, condition (3) is that the second monitoring occasion is an initial monitoring occasion after a beginning of channel occupancy time (COT) in the monitoring occasion set (association set).
(4) Furthermore, in the first aspect of the present disclosure, the first monitoring occasion is set by a first search area set, the second monitoring occasion is set by a second search area set.
(5) Furthermore, in the first aspect of the present disclosure, the first monitoring occasion is set based on at least a first parameter set in a search area set, the second monitoring occasion is set based on at least a second parameter set in a search area set.
(6) Furthermore, in the first aspect of the present disclosure, the first monitoring occasion is a monitoring occasion set at a beginning of a slot among monitoring occasions set by a search area set, the second monitoring occasion includes a monitoring occasion other than the first monitoring occasion among monitoring occasions set in a search area set.
(7) A second aspect of the present disclosure is a terminal device, comprising: a reception unit that receives a first PDCCH at a first monitoring occasion and receives the second PDCCH at a second monitoring occasion; and a transmission unit that transmits a HARQ-ACK codebook on a PUCCH, the HARQ-ACK codebook includes HARQ-ACK information for each of the first PDCCH and the second PDCCH, the HARQ-ACK codebook is provided based on at least a value of DAI included in the first PDCCH, the HARQ-ACK codebook is provided regardless of the value of DAI included in the second PDCCH.
(8) Furthermore, in the second aspect of the present disclosure, the HARQ-ACK codebook is obtained when assuming that the value of DAI does not indicate in the second PDCCH.
(9) Furthermore, in the second aspect of the present disclosure, the HARQ-ACK information for the second PDCCH is combined at an end of the HARQ-ACK codebook.
(10) A third aspect of the present disclosure is a base station device, comprising: a transmission unit that transmits setting information for a first monitoring occasion and a second monitoring occasion for a PDCCH, and transmits the PDCCH in at least the second monitoring occasion; and a reception unit that receives a PUCCH or PUSCH including a HARQ-ACK codebook, wherein the HARQ-ACK codebook is generated assuming the PDCCH is detected in the first monitoring occasion on the basis of a value of a DAI field included in the PDCCH.
(11) Furthermore, in the third aspect of the present disclosure, a monitoring occasion set corresponding to the PUCCH (association set) is obtained at least based on K0 and K1, the K0 is used to indicate that an index of a slot of the PDSCH scheduled based on the PDCCH is transmitted, the K1 is used to indicate that an index of a slot of the PUCCH is transmitted, the first monitoring occasion and the second monitoring occasion are included in the monitoring occasion set.
(12) Furthermore, in the third aspect of the present disclosure, the first monitoring occasion is set prior to the second monitoring occasion, the second monitoring occasion satisfies at least one of the conditions (1) to (3), condition (1) is that an initial signal is detected in the OFDM symbol corresponding to the second monitoring occasion, condition (2) is that the predetermined DCI format is received in the second monitoring occasion, condition (3) is that the second monitoring occasion is an initial monitoring occasion after a beginning of channel occupancy time (COT) in the monitoring occasion set (association set).
(13) Furthermore, in the third aspect of the present disclosure, the first monitoring occasion is set by a first search area set, the second monitoring occasion is set by a second search area set.
(14) Furthermore, in the third aspect of the present disclosure, the first monitoring occasion is set based on at least a first parameter set in a search area set, the second monitoring occasion is set based on at least a second parameter set in a search area set.
(15) Furthermore, in the third aspect of the present disclosure, the first monitoring occasion is a monitoring occasion set at a beginning of a slot among monitoring occasions set by a search area set, the second monitoring occasion includes a monitoring occasion other than the first monitoring occasion among monitoring occasions set in a search area set.
(16) A third aspect of the present disclosure is a base station device, comprising: a transmission unit that transmits a first PDCCH at a first monitoring occasion and transmits the second PDCCH at a second monitoring occasion; and a reception unit that receives a PUCCH including a HARQ-ACK codebook, wherein, the HARQ-ACK codebook includes HARQ-ACK information for each of the first PDCCH and the second PDCCH, the HARQ-ACK codebook is provided based on at least a value of DAI included in the first PDCCH, the HARQ-ACK codebook is provided regardless of the value of DAI included in the second PDCCH.
(17) Furthermore, in the fourth aspect of the present disclosure, the HARQ-ACK codebook is obtained when assuming that the value of DAI does not indicate in the second PDCCH.
(18) Furthermore, in the fourth aspect of the present disclosure, the HARQ-ACK information for the second PDCCH is combined at an end of the HARQ-ACK codebook.

The program operating on the base station device 3 and the terminal device 1 according to the present disclosure controls programs like a CPU (Central Processing Unit) or the like to realize the functions of the above implementations according to the present disclosure (programs that causes the computer to function). Furthermore, the information processed by the devices is temporarily stored in a RAM (Random Access Memory) at the time of processing, and thereafter stored in various ROM (Read Only Memory), such as a Flash ROM, or an HDD (Hard Disk Drive), which may be read, corrected and written by the CPU as necessary.

Furthermore, a part of the terminal device 1 or the base station device 3 in the above implementations may be realized by a computer. In this situation, a program for realizing the control functions may be recorded on a computer-readable recording medium, and the program recorded on the recording medium may be read by a computer system and executed for realizing the functions.

Furthermore, the "computer system" herein is a computer system built in the terminal device 1 or the base station device 3 and includes an OS and hardware such as peripheral devices. The "computer-readable recording medium" refers to a portable medium such as a flexible disk, an optical disk, a ROM, and a CD-ROM, and a storage device such as a hard disk built in a computer system.

Furthermore, the "computer-readable recording medium" may include a medium that dynamically stores the program for a short time, such as a communication line for transmitting the program through a network, like the Internet or a communication line such as a telephone line, a server in this situation, a medium storing a program for a certain period of time, such as a volatile memory in a computer system at a client end. Furthermore, the above-mentioned program may be a program for realizing a part of the functions described above, and may be a program capable of realizing the functions described above in combination with a program already recorded in a computer system.

The base station device 3 in the above implementations can also be realized as a set of a plurality of devices (device group). Each of the devices included in the device group may include a part or all of each function or each functional block of the base station device 3 according to the above implementations. The device group may just need to have each function or each function block of the base station device 3. Furthermore, the terminal device 1 according to the above implementations can also communicate with the base station device as a set.

Furthermore, the base station device 3 in the above implementations may be a EUTRAN (Evolved Universal Terrestrial Radio Access Network) and/or an NG-RAN (NextGen RAN, NR RAN). Furthermore, the base station device 3 in the above implementations may have some or all of the functions of the higher node for the eNodeB and/or gNB.

Furthermore, a part or all of the terminal device 1 and the base station device 3 in the above-described implementations may be typically realized as an LSI of an integrated circuit, or as a chipset. Each functional block of the terminal device 1 and the base station device 3 may be individually formed into a single chip, or a part or all may be integrated and formed into a chip. Furthermore, the method of circuit integration is not limited to LSI, and may be realized by a dedicated circuit or a general-purpose processor. Furthermore, in the case when a technology for forming an integrated circuit that replaces the LSI appears from the advancing of the semiconductor technology, an integrated circuit based on the technology may also be used.

Furthermore, in the above implementations, the terminal device is described as an example of the communications device. The present disclosure is not limited to the disclosed implementations, and may be applied to fixed or non-mobile electronic equipment installed indoor or outdoor. For example, the electronic equipment may be Audio-Video equipment, kitchen equipment, cleaning equipment, air-conditioner, office equipment, vending machines, other home appliances, terminal devices or communications devices.

As above, the implementations of the present disclosure are disclosed in detail with reference to the accompanying drawings. However, the implementations are not limited to the disclosed implementations. The present disclosure also includes design variations without departing from the scope or spirit of the disclosed concepts. Furthermore, the present disclosure also encompasses modifications within the scope of the claims, implementations suitably combining various disclosed implementations. Additionally, the disclosed implementations may have component substitutions that have similar effect.

## Claims

1. A terminal device, comprising:
a reception unit that sets a first monitoring occasion and a second monitoring occasion for a PDCCH, and receives the PDCCH in at least the second monitoring occasion; and
a transmission unit that, assuming the PDCCH is detected in the first monitoring occasion, generates a HARQ-ACK codebook on the basis of a value of a DAI field included in the PDCCH, and transmitting the HARQ-ACK codebook via a PUCCH or a PUSCH.

2. A terminal device according to claim 1, wherein,
a monitoring occasion set corresponding to the PUCCH (association set) is obtained at least based on K0 and K1,
the K0 is used to indicate that an index of a slot of the PDSCH scheduled based on the PDCCH is transmitted,
the K1 is used to indicate that an index of a slot of the PUCCH is transmitted,
the first monitoring occasion and the second monitoring occasion are included in the monitoring occasion set.

3. A terminal device according to claim 1, wherein,
the first monitoring occasion is set prior to the second monitoring occasion,
the second monitoring occasion satisfies at least one of the conditions (1) to (3), condition (1) is that an initial signal is detected in the OFDM symbol corresponding to the second monitoring occasion,
condition (2) is that the predetermined DCI format is received in the second monitoring occasion,
condition (3) is that the second monitoring occasion is an initial monitoring occasion after a beginning of channel occupancy time (COT) in the monitoring occasion set (association set).

4. A terminal device according to claim 1, wherein,
the first monitoring occasion is set by a first search area set,
the second monitoring occasion is set by a second search area set.

5. A terminal device according to claim 1, wherein,
the first monitoring occasion is set based on at least a first parameter set in a search area set,
the second monitoring occasion is set based on at least a second parameter set in a search area set.

6. A terminal device according to claim 1, wherein,
the first monitoring occasion is a monitoring occasion set at a beginning of a slot among monitoring occasions set by a search area set,
the second monitoring occasion includes a monitoring occasion other than the first monitoring occasion among monitoring occasions set in a search area set.

7. A terminal device, comprising:
a reception unit that receives a first PDCCH at a first monitoring occasion and receives the second PDCCH at a second monitoring occasion; and
a transmission unit that transmits a HARQ-ACK codebook on a PUCCH, the HARQ-ACK codebook includes HARQ-ACK information for each of the first PDCCH and the second PDCCH,
the HARQ-ACK codebook is provided based on at least a value of DAI included in the first PDCCH,
the HARQ-ACK codebook is provided regardless of the value of DAI included in the second PDCCH.

8. A terminal device according to claim 7, wherein,
the HARQ-ACK codebook is obtained when assuming that the value of DAI does not indicate in the second PDCCH.

9. A terminal device according to claim 7, wherein,
the HARQ-ACK information for the second PDCCH is combined at an end of the HARQ-ACK codebook.

10. A base station device, comprising:
a transmission unit that transmits setting information for a first monitoring occasion and a second monitoring occasion for a PDCCH, and transmits the PDCCH in at least the second monitoring occasion; and
a reception unit that receives a PUCCH or PUSCH including a HARQ-ACK codebook, wherein the HARQ-ACK codebook is generated assuming the PDCCH is detected in the first monitoring occasion on the basis of a value of a DAI field included in the PDCCH.

11. A base station device according to claim 10, wherein,
a monitoring occasion set corresponding to the PUCCH (association set) is obtained at least based on K0 and K1,
the K0 is used to indicate that an index of a slot of the PDSCH scheduled based on the PDCCH is transmitted,
the K1 is used to indicate that an index of a slot of the PUCCH is transmitted,
the first monitoring occasion and the second monitoring occasion are included in the monitoring occasion set.

12. A base station device according to claim 10, wherein,
the first monitoring occasion is set prior to the second monitoring occasion,
the second monitoring occasion satisfies at least one of the conditions (1) to (3), condition (1) is that an initial signal is detected in the OFDM symbol corresponding to the second monitoring occasion,
condition (2) is that the predetermined DCI format is received in the second monitoring occasion,
condition (3) is that the second monitoring occasion is an initial monitoring occasion after a beginning of channel occupancy time (COT) in the monitoring occasion set (association set).

13. A base station device according to claim 10, wherein,
the first monitoring occasion is set by a first search area set,
the second monitoring occasion is set by a second search area set.

14. A base station device according to claim 10, wherein,
the first monitoring occasion is set based on at least a first parameter set in a search area set,
the second monitoring occasion is set based on at least a second parameter set in a search area set.

15. A base station device according to claim 10, wherein,
the first monitoring occasion is a monitoring occasion set at a beginning of a slot among monitoring occasions set by a search area set,
the second monitoring occasion includes a monitoring occasion other than the first monitoring occasion among monitoring occasions set in a search area set.

16. A base station device, comprising:
a transmission unit that transmits a first PDCCH at a first monitoring occasion and transmits the second PDCCH at a second monitoring occasion; and
a reception unit that receives a PUCCH including a HARQ-ACK codebook, wherein, the HARQ-ACK codebook includes HARQ-ACK information for each of the first PDCCH and the second PDCCH,
the HARQ-ACK codebook is provided based on at least a value of DAI included in the first PDCCH,
the HARQ-ACK codebook is provided regardless of the value of DAI included in the second PDCCH.

17. A base station device according to claim 16, wherein,
the HARQ-ACK codebook is obtained when assuming that the value of DAI does not indicate in the second PDCCH.

18. A base station device according to claim 16, wherein,
the HARQ-ACK information for the second PDCCH is combined at an end of the HARQ-ACK codebook.

19. A communications method used in a terminal device, wherein the communications method comprises:
setting a first monitoring occasion and a second monitoring occasion for a PDCCH, and receiving the PDCCH in at least the second monitoring occasion; and
assuming the PDCCH is detected in the first monitoring occasion, generating a HARQ-ACK codebook on the basis of a value of a DAI field included in the PDCCH, and transmitting the HARQ-ACK codebook via a PUCCH or a PUSCH.

20. A communications method used in a terminal device, wherein the communications method comprises:
receiving a first PDCCH at a first monitoring occasion and receiving the second PDCCH at a second monitoring occasion; and
transmitting a HARQ-ACK codebook on a PUCCH, the HARQ-ACK codebook includes HARQ-ACK information for each of the first PDCCH and the second PDCCH,
the HARQ-ACK codebook is provided based on at least a value of DAI included in the first PDCCH,
the HARQ-ACK codebook is provided regardless of the value of DAI included in the second PDCCH.

21. A communications method used in a base station device, wherein the communications method comprises:
transmitting setting information for a first monitoring occasion and a second monitoring occasion for a PDCCH, and transmitting the PDCCH in at least the second monitoring occasion; and
receiving a PUCCH or PUSCH including a HARQ-ACK codebook, wherein the HARQ-ACK codebook is generated assuming the PDCCH is detected in the first monitoring occasion on the basis of a value of a DAI field included in the PDCCH.

22. A communications method used in a base station device, wherein the communications method comprises:
transmitting a first PDCCH at a first monitoring occasion and transmitting the second PDCCH at a second monitoring occasion; and
receiving a PUCCH including a HARQ-ACK codebook, wherein, the HARQ-ACK codebook includes HARQ-ACK information for each of the first PDCCH and the second PDCCH,
the HARQ-ACK codebook is provided based on at least a value of DAI included in the first PDCCH,
the HARQ-ACK codebook is provided regardless of the value of DAI included in the second PDCCH.
